(19) Europäisches Patentamt
European Patent Office
Office européen des brevets

(11) **EP 3 608 157 A1**

(12) **EUROPÄISCHE PATENTANMELDUNG**

(43) Veröffentlichungstag:
**12.02.2020  Patentblatt 2020/07**

(51) Int Cl.:
***B60L 53/124*** (2019.01)      ***H02J 50/60*** (2016.01)

(21) Anmeldenummer: **19190456.4**

(22) Anmeldetag: **07.08.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.08.2018   DE 102018119203**

(71) Anmelder: **Zollner Elektronik AG
93499 Zandt (DE)**

(72) Erfinder: **Amberger, Daniel
94234 Viechtach (DE)**

(74) Vertreter: **Bittner, Bernhard
Hannke Bittner & Partner
Patent- und Rechtsanwälte mbB
Prüfeninger Strasse 1
93049 Regensburg (DE)**

(54) **VORRICHTUNG UND VERFAHREN ZUR OBJEKTERFASSUNG**

(57)    Verfahren zum Erfassen von Objekten bei Ladeanordnungen (1) zum Laden von elektrisch betriebenen Einrichtungen mittels einer Erfassungseinrichtung (20), wobei wenigstens eine Einzelsensoreinrichtung (43) aufweisend einen elektrischen Schaltkreis, der wenigstens eine Erfassungsspule (41) und/oder wenigstens einen Widerstand und/oder wenigstens einen Kondensator aufweist, mit einer Vielzahl von verschiedenen Wechselspannungen beaufschlagt wird und jeweils wenigstens eine für die Einzelsensoreinrichtung (43) charakteristische elektrische Größe ($a_i$, $b_i$) gemessen wird. Erfindungsgemäß wird auf Grundlage einer Vielzahl für die Einzelsensoreinrichtung (43) gemessenen, charakteristischen elektrischen Größe(n) ($a_i$, $b_i$) wenigstens eine, bevorzugt für den elektrischen Schaltkreis charakteristische, Auswertegröße ($R_{sensor,0}$, $L_{sensor,0}$) ermittelt, wobei in Abhängigkeit von der Auswertegröße ($R_{sensor,0}$, $L_{sensor,0}$) festgestellt wird, ob in der Umgebung der Einzelsensoreinrichtung (43) ein gegenüber dieser Einzelsensoreinrichtung (43) bewegliches Objekt befindlich ist.

Fig. 3

## Beschreibung

Die vorliegende Erfindung bezieht sich auf eine Vorrichtung und ein Verfahren zum Erfassen (bzw. Erkennen) von Objekten (genauer zum Erfassen der Anwesenheit von Objekten) und insbesondere von Fremdkörpern. Die Vorrichtung wird unter Bezugnahme auf ein Ladesystem zum Laden von elektrischen Geräten beschrieben. Es wird jedoch darauf hingewiesen, dass diese Vorrichtung zum Erfassen von Objekten auch in anderen Bereichen Anwendung finden kann, beispielsweise bei der Erfassung von Personen oder Lebewesen, aber auch bei der Erfassung von Objekten wie beispielsweise Kraftfahrzeugen. Bei den Fremdkörpern, die auch als Fremdobjekte bezeichnet werden können, kann es sich sowohl um anorganische Körper beispielsweise Metalle handeln, als auch um organische Körper.

Im Stand der Technik sind Ladesysteme für elektrisch betriebene Kraftfahrzeuge bekannt, welche den Ladevorgang induktiv und insbesondere berührungslos durchführen. Zu diesem Zweck kann beispielsweise das Kraftfahrzeug über ein Ladegerät gefahren werden und dieses Ladegerät weist eine Primärspule auf, über welche eine Spule des kraftfahrzeugseitigen Ladesystems versorgt wird.

Leitende Objekte in einem sich zeitlich ändernden Magnetfeld können sich durch Induktion oder ggf. Ummagnetisierung erwärmen. Dies kann bis zu einem Glühen oder Entflammen der Objekte führen. Aus diesem Grund ist in einer induktiven Ladeeinheit ein System notwendig, das diese Situation verhindert, bevor es zu einer kritischen Erwärmung und den damit verbundenen Risiken kommt.

Aus dem internen Stand der Technik der Anmelderin ist ein System "FOD" (Foreign Object Detection) mit der Funktion einer Fremdkörpererkennung im Umfeld eines induktiven Ladesystems bekannt. Ziel dabei ist das Detektieren von Fremdkörpern vor und während des Ladebetriebs. Daraus folgt das Verhindern bzw. Minimieren von möglichen Gefahren für das System selbst, dessen Umfeld und den Anwender (Gefahr durch berühren heißer Objekte, Verhinderung Brandgefahr,...).

Die Grundlage des FOD-Systems bildet dabei ein aktives elektromagnetisches Sensorsystem. Induktive Sensoren, die von einem zeitvarianten Strom durchflossen werden, erzeugen ein zeitvariantes magnetisches Wirbelfeld. Fremdobjekte, die in den Wirkungsbereich des magnetischen Feldes gebracht werden, erfahren eine Wechselwirkung mit dem Selbigen. Die Eigenschaften des Sensors werden dadurch verändert. Es besteht ein deterministischer Zusammenhang zwischen der Änderung der elektrischen Sensoreigenschaften und den physikalischen Eigenschaften der Objekte (insbesondere elektrische und magnetische Leitfähigkeiten bzw. Verlustfaktoren), der Größe und Form der Fremdobjekte und der Entfernung vom und Lage zum Sensor.

Aus den Vorrichtungen und Verfahren, die derzeit aus dem Stand der Technik bekannt sind, ergibt sich der Nachteil, dass die Messergebnisse des Sensors statistischen Schwankungen unterliegen. Zugleich soll die Taktung zur präzisen Ermittlung eines Messwertes bzw. einer Detektion eines Fremdobjekts möglichst klein gehalten werden, um auf hochdynamische Änderungen schnell reagieren zu können.

Der vorliegenden Erfindung liegt daher die Aufgabe zugrunde, eine unabhängig von der Umgebung und auch während des Ladebetriebs, gleichermaßen hohe Präzision und Zuverlässigkeit der Fremdkörpererkennung bereitzustellen bzw. zu gewährleisten und hierdurch die Sicherheit derartiger induktiver Ladeeinrichtungen zu erhöhen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche. Eine weitere Aufgabe der Erfindung besteht darin, eine Erfassungseinrichtung zur Verfügung zu stellen, welche ein präzises und sicheres Erfassen von Objekten, insbesondere ein Erfassen und/oder Feststellen der Anwesenheit von Objekten ermöglicht.

Eine erfindungsgemäße Ladeanordnung zum Laden von elektrisch betriebenen Einrichtungen weist wenigstens eine Primärspule auf, welche dazu geeignet und bestimmt ist, ein magnetisches Feld zu erzeugen, um elektrische Energie induktiv auf eine Sekundärspule, welche Bestandteil der elektrisch betriebenen Einrichtung ist, zu übertragen.

Bei der Ladeanordnung handelt es sich insbesondere um ein Primärmodul, welches dazu geeignet und bestimmt ist, ein Sekundärmodul (etwa ein, eine Sekundärspule aufweisendes, Modul) des zu ladenden Objekts (zum Beispiel eines Fahrzeugs), induktiv mit Energie zu versorgen.

Dabei weist die Ladeanordnung erfindungsgemäß eine Erfassungseinrichtung zum Erfassen von Objekten auf, wobei die Erfassungseinrichtung wenigstens einen Signalgenerator, welcher dazu geeignet und bestimmt ist, wenigstens eine Einzelsensoreinrichtung aufweisend einen elektrischen Schaltkreis, der wenigstens eine Erfassungsspule und/oder wenigstens einen Widerstand und/oder wenigstens einen Kondensator aufweist, mit Wechselspannung und insbesondere mit verschiedenen Wechselspannungen zu versorgen, und eine Auswerteeinrichtung (und/oder eine Messeinrichtung) auf, die dazu geeignet und bestimmt ist, wenigstens eine für die Einzelsensoreinrichtung (und/oder für den elektrischen Schaltkreis) charakteristische elektrische Größe zu erfassen.

Weiterhin ist die Erfassungseinrichtung erfindungsgemäß dazu geeignet und bestimmt, auf Grundlage einer Vielzahl für die Einzelsensoreinrichtung unter Beaufschlagung mit verschiedenen Wechselspannungen gemessenen, charakteristischen elektrischen Größen wenigstens eine, bevorzugt für den elektrischen Schaltkreis charakteristische, Auswertegröße zu ermitteln, wobei die Erfassungseinrichtung dazu geeignet und bestimmt ist, in Abhängigkeit von der Auswertegröße festzustellen, ob in der Umgebung der Einzelsensoreinrichtung ein gegenüber dieser Einzelsensoreinrichtung bewegliches Objekt befindlich ist. Dabei ist die Ladeanordnung bevorzugt dazu geeignet und bestimmt, das weiter unten beschriebene Verfahren bzw. einzelne in diesem Kontext beschriebene Verfahrensschritte oder in Kombination auszuführen.

Dabei handelt es sich bei der für die Einzelsensoreinrichtung (bzw. für den elektrischen Schaltkreis) charakteristischen Größe bevorzugt um Phaseninformationen (und/oder Amplitudeninformationen) und diese charakteristische Größe ist bevorzugt auf Basis von Streuparametermessungen des elektrischen Schaltkreises (bzw. der Einzelsensoreinrichtung(en)) gewonnen. Dabei wird insbesondere unter der für die Einzelsensoreinrichtung charakteristischen Größe eine Größe verstanden, die (unter anderem auch) von wenigstens einem Kennwert, bevorzugt von einer Vielzahl von Kennwerten (etwa zwei Kennwerten), des Serienersatzbildes (bzw. der Serienersatzschaltung) der (bzw. wenigstens einer) Einzelsensoreinrichtung (welches beispielsweise aus einem Serienersatzwiderstand und einer Induktivität besteht oder diese aufweist) abhängt. Dabei kann es sich bei dem Kennwert beispielsweise um den Widerstandswert oder den Wert der Induktivität oder den Kapazitätswert des Serienersatzschaltung (bzw. Serienersatzbild) der Einzelsensoreinrichtung handeln. Bevorzugt wird dabei (wenigstens) ein Messsignal direkt abgetastet. Bevorzugt wird die charakteristische Größe durch vektorielle Streuparametermessungen des elektrischen Schaltkreises (bzw. der Einzelsensoreinrichtung(en)) bestimmt.

Bevorzugt handelt es sich bei der Wechselspannung um eine Sinusspannung und allgemein um eine periodische Wechselspannung. Bevorzugt handelt es sich bei der Wechselspannung um die Überlagerung wenigstens zweier oder bevorzugt mehrerer Sinusspannungen (und/oder Kosinusspannungen). Bei dem Signalgenerator kann es sich bevorzugt um einen Frequenzgenerator handeln. Bevorzugt ist der Signalgenerator dazu geeignet und bestimmt, mehrere Wechselspannungen wie etwa Sinusspannungen und/oder Kosinusspannungen zu überlagern. Dabei kann das Signal bzw. die Wechselspannung durch einen Digital-Analog-Converter erzeugt werden. Insbesondere ist der Signalgenerator dazu geeignet und bestimmt, verschieden Wechselspannungen, welche sich in der Amplitude und/oder Frequenz voneinander unterscheiden, zu erzeugen.

Besonders bevorzugt erfasst die Auswerteeinrichtung die charakteristische Größe des Schaltkreises (bzw. der Einzelsensoreinrichtung(en)) durch eine Beaufschlagung desselben mit der Wechselspannung und genauer durch das Erfassen einer Reaktion, des mit der Wechselspannung beaufschlagten Schaltkreises (bzw. der mit der Wechselspannung beaufschlagten Einzelsensoreinrichtung), auf die Anwesenheit eines Fremdkörpers. Die oben genannte Spule der Erfassungseinrichtung bzw. der Einzelsensoreinrichtung(en) wird bzw. werden zum Zwecke der besseren Abgrenzung gegenüber der Primärspule im Folgenden auch als Erfassungsspule bezeichnet. Allgemein weist die Erfassungseinrichtung wenigstens ein elektrisches Bauteil auf, dessen Eigenschaften und insbesondere dessen Stromleiteigenschaften sich bei Anwesenheit eines Fremdkörpers ändern. Bei diesem Bauteil kann es sich insbesondere um eine Spule (oder allgemein um eine Induktivität) und/oder einen Kondensator (oder allgemein um ein kapazitives Element) handeln. Zusätzlich kann ein Widerstand vorhanden sein.

Die Erfassungseinrichtung kann dabei bevorzugt ein Bestandteil der Ladeanordnung sein, bzw. mit dem Primärmodul in fester Verbindung stehen (bzw. einen Teil des Primärmoduls ausbilden). Es wäre jedoch auch denkbar, dass die Erfassungseinrichtung in das Sekundärmodul des zu ladenden Objekts integriert ist oder aber dass die Erfassungseinrichtung ein weiteres Modul ist, welches beispielsweise zwischen dem Primärmodul und dem Sekundärmodul angeordnet ist.

Bevorzugt ist die elektrische und aufzuladende Einrichtung aus einer Gruppe von Einrichtungen ausgewählt, welche Kraftfahrzeuge, insbesondere PKWs, Motorräder, Haushaltsgeräte, Telekommunikationsgeräte, wie Smartphones und dergleichen, enthält. Vorteilhaft weist die Ladeanordnung ein Netzteil auf, um die Primärspule mit elektrischer Energie zu versorgen.

In einer vorteilhaften Ausführungsform wird die Primärspule mit einer Primärspannung einer ersten Frequenz betrieben (bei dieser Frequenz handelt es sich bevorzugt um die im Nachfolgenden bezeichnete Ladefrequenz, welche bevorzugt für den Ladevorgang zur Energieübertragung verwendet wird) und die Wechselspannungsquelle des (Objekt-)Erfassungssystems gibt eine Wechselspannung einer zweiten Frequenz (bei dieser Frequenz handelt es sich bevorzugt um die im Nachfolgenden bezeichnete Messfrequenz) ab und eine dieser beiden Frequenzen ist wenigstens doppelt so groß wie die andere der beiden Frequenzen. Es wird daher hierbei vorgeschlagen, dass sich die Frequenzen, die zum Betrieb des elektrischen Schaltkreises bzw. Schwingkreises einerseits verwendet werden und die zum Betrieb der Primärspule andererseits verwendet werden, erheblich voneinander unterscheiden, wenigstens um den Faktor 2. Bevorzugt ist die Frequenz, die zum Betrieb des Schaltkreises bzw. Schwingkreises verwendet wird wesentlich höher als die Frequenz, mit der die Primärspule versorgt wird. Vorzugsweise ist die eine der genannten Frequenzen wenigstens fünfmal so groß wie die andere, bevorzugt wenigstens zehnmal so groß, besonders bevorzugt wenigstens einhundertmal so groß. Auf diese Weise kann erreicht werden, dass auch während eines Betriebs der Primärspule der elektrische Schwingkreis nicht wesentlich durch den Einfluss der Primärspule b deren magnetisches Feld beeinflusst wird.

Bei einer weiteren vorteilhaften Ausführungsform sind die Primärspule und die Erfassungsspule (oder allgemein die Erfassungseinrichtung bzw. Bestandteile der Erfassungseinrichtung) in einer vorgegebenen festen Position zueinander angeordnet. (wie erwähnt, kann der empfindliche Part kann auch ein Kondensator sein). Ein (zweites) Sensornetzwerk kann auch im Automodul angebracht sein. Auf diese Weise kann eine bessere Zwischenraumüberwachung erreicht werden. So können beispielsweise die Primärspule und die Erfassungseinrichtung (beispielsweise eine Erfassungsspule) an einem gemeinsamen Träger und/oder an einem gemeinsamen Gehäuse angeordnet sein. Besonders bevorzugt ist ein Schutzelement vorgesehen, welches die Primärspule sowie auch die Erfassungsspuleneinrichtung bzw. den elektrischen Schaltkreis und/oder den elektrischen Schwingkreis vor einer unmittelbaren Berührung schützt. Eine Dicke bzw. Widerstandsfähigkeit dieser Schutzschicht kann sich dabei nach den jeweiligen Anforderungen richten. Etwa dem Einsatzgebiet der Erfassungseinrichtung oder auch dem Einsatzgebiet der Ladeanordnung.

In einer weiteren vorteilhaften Ausführungsform weist die Ladeanordnung eine Steuerungseinrichtung auf, welche eine Bestromung der Primärspule in Abhängigkeit von einem Ausgangssignal der Erfassungseinrichtung steuert. Falls sich beispielsweise anhand dieses Ausgangssignals ergibt, dass sich ein Fremdkörper zwischen der Primärspule und der Sekundärspule bzw. im Bereich der Primärspule befindet, so kann eine (Einschalt-)Bestromung der Primärspule verhindert oder eine Stromzufuhr für die Primärspule abgeschalten werden, um auf diese Weise Sicherungsrisiken zu verhindern. Weiterhin kann die Vorrichtung eine Informationsausgabeeinrichtung aufweisen, welche den Benutzer in physisch wahrnehmbarer Weise über einen Fremdkörper informiert. Genauer gesagt ist es möglich dass der Sensor auch eine Voraberkennung vor dem Ladebetrieb leistet (da der Sensor eben auch unabhängig von dem Betrieb der Primärspule erfassen kann). Dies zeichnet ihn gegenüber anderen bekannten Sensorsystemen aus. Hier ist auch eine der großen Stärken der Erfindung zu sehen.

Gemäß zumindest einer Ausführungsform weist die Erfassungseinrichtung (der Ladeanordnung) zumindest einen A/D-Wandler auf, welcher ein Analogsignal abtastet.

Gemäß zumindest einer Ausführungsform werden die Phaseninformationen auf Basis der Streuparameter gewonnen, indem die Streuparameter mittels Algorithmen als komplexe Größen erfasst werden.

Gemäß zumindest einer Ausführungsform ist eine Signalaufbereitung vorgesehen, welche dem Mikrocontroller ein aufbereitetes Analogsignal zur Verfügung stellt.

Diese Ausgabeeinrichtung kann dabei beispielsweise ein akustisches Alarmsignal ausgeben, welches dem Benutzer anzeigt, dass sich ein Fremdkörper im Bereich der Primärspule befindet. Weiterhin ist es auch möglich, dass bei der Erfassung eines Fremdkörpers auch während des laufenden Betriebs insbesondere des laufenden Ladebetriebs abgeschaltet wird oder ein Einschalten verhindert wird. Weiterhin ist es möglich, dass die Primärspule und die Erfassungsspule gemeinsam betrieben werden. Es ist jedoch auch möglich, dass die Erfassungsspule außerhalb des Betriebs der Primärspule betrieben wird.

Weiterhin kann eine Steuerungseinrichtung vorgesehen sein, welche Messungen auf Fremdkörper in vorgegebenen Zeitabständen bzw. zu diskreten Zeitpunkten durchführt, beispielsweise in einer vorgegebenen Taktung.

Die vorliegende Erfindung ist weiterhin gerichtet auf eine Erfassungseinrichtung zum Erfassen von Objekten, wobei die Erfassungseinrichtung wenigstens einen Signalgenerator, welcher dazu geeignet und bestimmt ist, wenigstens eine Einzelsensoreinrichtung aufweisend einen elektrischen Schaltkreis (und insbesondere einen Schwingkreis), der wenigstens eine Erfassungsspule und/oder wenigstens einen Widerstand und/oder wenigstens einen Kondensator aufweist, mit Wechselspannung zu versorgen, und eine Auswerteeinrichtung aufweist, die dazu geeignet und bestimmt ist, wenigstens eine für die Einzelsensoreinrichtung charakteristische elektrische Größe zu erfassen. Bevorzugt weist die Erfassungseinrichtung wenigstens zwei Spulen bzw. wenigstens zwei Erfassungsspulen auf. Bevorzugt weist die Erfassungseinrichtung wenigstens einen Kondensator auf.

Die Erfassungseinrichtung kann beispielsweise eine Messeinrichtung aufweisen, welche ein von dem (bevorzugt jedem) Schwingkreis (bzw. von wenigstens einer Einzelsensoreinrichtung und bevorzugt von jeder Einzelsensoreinrichtung) stammendes elektrisches Signal misst. Ggfs. weist die Messeinrichtung und/oder die Sensoreinrichtung wenigstens einen Richtkoppler auf. Bevorzugt wird jedoch eine Messeinrichtung und/oder Sensoreinrichtung verwendet, welche ohne die Verwendung eines Richtkopplers arbeitet.

Erfindungsgemäß ist die Erfassungseinrichtung dazu geeignet und bestimmt, auf Grundlage von wenigstens einer charakteristischen elektrischen Größe und bevorzugt auf Grundlage von einer Vielzahl für die Einzelsensoreinrichtung unter Beaufschlagung mit verschiedenen Wechselspannungen gemessenen, charakteristischen elektrischen Größen wenigstens eine, bevorzugt für den elektrischen Schaltkreis charakteristische, Auswertegröße zu ermitteln.

Weiterhin ist die Erfassungseinrichtung erfindungsgemäß dazu geeignet und bestimmt, in Abhängigkeit von der Auswertegröße und bevorzugt wenigstens einer für die Einzelsensoreinrichtung charakteristischen Größe festzustellen, ob in der Umgebung der Einzelsensoreinrichtung ein gegenüber dieser Einzelsensoreinrichtung bewegliches Objekt befindlich ist. Dabei ist bevorzugt die Erfassungseinrichtung dazu geeignet und bestimmt, obig im Zusammenhang mit dem Verfahren zum Erfassen von Objekten beschriebene Verfahrensschritte einzeln oder in Kombination auszuführen und umgekehrt. Ferner kann die Erfassungseinrichtung die obig im Zusammenhang mit der Ladeanordnung beschriebene Merkmal einzeln oder in Kombination aufweisen und umgekehrt.

Eine Anwendung dieser Erfassungseinrichtung kann damit wiederum eine Ladeeinrichtung zum Laden von beispielsweise Fahrzeugen sein. Bevorzugt weist der Schwingkreis eine Vielzahl von Erfassungsspulen auf (zu jedem Schwingkreis gehört bevorzugt meistens immer genau eine Spule oder eine Vielzahl von in Serie und/oder parallel geschalteten Spulen) bevorzugt wenigstens vier Spulen, bevorzugt wenigstens fünf Spulen und bevorzugt wenigstens sechs Spulen.

Weiterhin sind bevorzugt mehrere Spulen eines Schwingkreises seriell angeordnet. Es wäre jedoch auch möglich, dass im Rahmen eines Schwingkreises mehrere Spulen parallel angeordnet sind. Daneben können bevorzugt mehrere elektrische Schwingkreise vorgesehen sein, die beispielsweise jeweils wenigstens eine Spule und wenigstens einen Kondensator aufweisen. Dabei wäre es möglich, dass mittels einer Steuerung diese parallelen Schwingkreise beispielsweise nacheinander angesprochen bzw. bestromt werden. Bei einer weiteren vorteilhaften Ausführungsform ist die Frequenz des Signalgenerators in einem vorbestimmten Frequenzbereich bzw. Frequenzband durchstimmbar.

Bevorzugt ist wenigstens eine Frequenz und besonders bevorzugt sind alle Frequenzen ausgewählt aus einem Bereich um 1 MHz. Bevorzugt wird die Sensoreinrichtung und/oder die Einzelsensoreinrichtung(en) insbesondere sequentiell mit Wechselspannung unterschiedlicher Frequenzen beaufschlagt. Bevorzugt werden hierfür mindestens zehn, bevorzugt mindestens zwanzig, bevorzugt mindestens dreißig und besonders bevorzugt 32 und/oder bevorzugt höchstens 50 unterschiedliche Frequenzen gewählt. Bevorzugt sind diese ausgewählt aus einem Bereich zwischen 500 kHz und 1 MHz, bevorzugt aus einem Bereich zwischen 600 kHz und 900 kHz und besonders bevorzugt aus einem Bereich zwischen 700 kHz und 900 kHz.

Beispielsweise liegt eine Kapazität des bzw. wenigstens eines Kondensators des Schaltkreises zwischen 20 pF und 1nF, bevorzugt zwischen 50 pF und 500 pF und bevorzugt zwischen 100 pF und 300 pF. Insbesondere kann eine Kapazität des bzw. wenigstens eines Kondensators des Schaltkreises zwischen 1 nF und 50 nF, bevorzugt zwischen 3 nF und 30 pF und bevorzugt zwischen 4 nF und 20 nF, liegen. Vorteilhaft ist der wenigstens eine Kondensator aus einer Gruppe von Kondensatoren ausgewählt, welche Folienkondensatoren, Keramikkondensatoren und dergleichen enthält. Daneben könnten auch sogenannte Kapazitätsdioden Anwendung finden, deren Kapazität veränderbar ist.

Bei einer weiteren vorteilhaften Ausführungsform weist die Vorrichtung einen A/D-Wandler auf um analoge Signale in digitale Signale umzuwandeln.

Bevorzugt erzeugt der Signalgenerator oder ein Digital/Analog-Wandler eine hinsichtlich der Frequenz veränderbare Ausgangsspannung. Auf diese Weise kann eine Frequenz, mit der oder die elektrische Schwingkreise angesteuert werden, in einem bestimmten Bereich und insbesondere einem bestimmten Bereich um eine Resonanzfrequenz angesteuert werden.

Bei einer weiteren vorteilhaften Ausführungsform weist die Erfassungseinrichtung eine Steuerungseinrichtung auf, welche die Frequenz der Ausgangsspannung des Signalgenerators in einem vorgegebenen Frequenzbereich steuert. So kann beispielsweise eine Frequenz des Signalgenerators in einem bestimmten Frequenzbereich durchgestimmt werden. So könnte beispielsweise die Frequenz in einem Bereich von +/- 50 Kilohertz (+/-50 kHz) um eine Eigenfrequenz des Schwingkreises angesteuert werden.

Bevorzugt erlaubt die Auswerteeinrichtung und/oder die Messeinrichtung eine Erfassung nur einer Kenngröße oder nur weniger Kenngrößen des Schaltkreises bzw. Netzwerks.

Ggfs. weist die Messeinrichtung und/oder die Auswerteeinrichtung und/oder die Einzelsensoreinrichtung(en) wenigstens einen Richtkoppler auf, um wenigstens einen Anteil einer Spannung aus dem Schaltkreis abzugreifen. Bevorzugt ist jedoch eine Ausgestaltung, welche auf den Einsatz von Richtkopplern verzichtet. Ggfs. weist die Auswerteeinrichtung und/oder die Einzelsensoreinrichtung(en) wenigstens zwei derartige Richtkoppler auf. Bei einer weiteren vorteilhaften Ausführungsform handelt es sich bei wenigstens einem Richtkoppler um einen unidirektionalen Richtkoppler. Bei einer weiteren vorteilhaften Ausführungsform handelt es sich bei wenigstens einem dieser Richtkoppler um einen bidirektionalen Richtkoppler. Bei einer weiteren vorteilhaften Ausführungsform weist die Auswerteeinrichtung wenigstens eine Messeinrichtung zur Messung einer Stromstärke oder einer Spannung auf. Vorteilhaft ist diese Messeinrichtung parallel oder in Serie zum dem erwähnten Schaltkreis oder Schwingkreis.

Bevorzugt dient die Erfassungseinrichtung auch zum nicht-optischen Erfassen von Fremdkörpern und/oder Objekten.

Bei einer weiteren vorteilhaften Ausführungsform ist die wenigstens eine und sind bevorzugt die wenigstens zwei Erfassungsspulen auf einer Platine angeordnet und besonders bevorzugt auf dieser Platine aufgedruckt. Diese Vorgehensweise hat sich als besonders platzsparend erwiesen. Bevorzugt sind die Windungen der Spule in wenigstens einer Ebene, bevorzugt in genau einer Ebene angeordnet. Dies führt zu einer Kostenreduzierung, weil ein PCB mit wenigen Layern kostengünstiger ist. Daneben kann auch eine Bauraumreduzierung erreicht werden. Dies kann wie erwähnt beispielsweise durch ein Aufdrucken auf eine Platine erreicht werden. Auch der oder die Kondensatoren kann/können auf der Platine angeordnet sein (oder sogar die gesamte Messelektronik).

Bei einer weiteren vorteilhaften Ausführungsform sind mehrere Spulen in einer Ebene angeordnet und bevorzugt sind alle Spulen in einer Ebene angeordnet.

Bei einer weiteren vorteilhaften Ausführungsform weist die Vorrichtung mehrere elektrische Schaltkreise bzw. Schwingkreise auf sowie eine Schalteinrichtung, die bewirkt, dass diese Schaltkreise bzw. Schwingkreise sequentiell mit einer Wechselspannung und insbesondere mit der Wechselspannung eines Signalgenerators beaufschlagt werden. Auf diese Weise können sequentiell mittels der Schalteinrichtung unterschiedliche Schwingkreise bzw. unterschiedliche Einzelsensoreinrichtungen angesprochen werden und für jeden einzelnen dieser Schwingkreise bestimmt werden, ob sich in seiner Umgebung ein Fremdobjekt befindet. Bei einer bevorzugten Ausführungsform handelt es sich bei dieser Schalteinrichtung um einen sog. Multiplexer. Bevorzugt ist die Schalteinrichtung (auch) als Sensorschnittstelle ausgebildet.

Bevorzugt weist die Erfassungseinrichtung eine (induktive) Sensoreinrichtung auf, welche insbesondere wenigstens die eine (induktive) Einzelsensoreinrichtung und bevorzugt eine Vielzahl von (induktiven) Einzelsensoreinrichtungen (bevorzugt mit jeweils einem Schaltkreis und insbesondere Schwingkreis bevorzugt aufweisend wenigstens eine Spule und/oder wenigstens einen Kondensator und/oder wenigstens einen Widerstand) aufweist. Bevorzugt weist eine (jede) Einzelsensoreinrichtung wenigstens eine Spule sowie wenigstens eine damit verbundene Resonanzanpassungseinrichtung (nachfolgend auch als Resonanzanpassung) insbesondere zur Anpassung und/oder Einstellung der Resonanzfrequenz (des Schwingkreises bzw. des Schaltkreises bzw. der Einzelsensoreinrichtung) auf, wobei bevorzugt die Resonanzanpassungseinrichtung geeignet und bestimmt ist, als Filter zu wirken und/oder eine Leistung der Einzelsensoreinrichtung anzupassen. Nachfolgend werden die Einzelsensoreinrichtungen auch als Einzelsensoren oder Sensorfelder bezeichnet. Bevorzugt sind wenigstens zwei, bevorzugt wenigstens zehn, bevorzugt wenigstens 16, bevorzugt wenigstens 32 und besonders bevorzugt wenigstens 64 und/oder höchstens 256 und bevorzugt höchstens 128 und besonders bevorzugt höchstens 64 Einzelsensoreinrichtungen vorgesehen.

Bevorzugt ist jede Einzelsensoreinrichtung mit der Auswerteeinrichtung und/oder dem Signalgenerator und/oder der Messeinrichtung (elektrisch) verbunden und/oder verbindbar. Dabei ist bevorzugt jede Einzelsensoreinrichtung (der Sensoreinrichtung) mit einer/der Sensorschnittstelle und/oder einer/der Schalteinrichtung (Mulitplexer) (elektrisch) verbunden und/oder über diese Sensorschnittstelle mit dem Signalgenerator verbindbar.

In einer weiteren vorteilhaften Ausführungsform weist die Erfassungseinrichtung und insbesondere die Auswerteeinrichtung eine Speichereinrichtung auf, in der die von der Auswerteeinrichtung und/oder Messeinrichtung erfassten und/oder gemessenen elektrischen Größen (charakteristisch für wenigstens eine Einzelsensoreinrichtung) abgelegt und/oder abgerufen werden können.

Bevorzugt weist die Erfassungseinrichtung und insbesondere die Auswerteeinrichtung einen Prozessor bzw. eine Recheneinrichtung auf, die bevorzugt wenigstens eine für eine Einzelsensoreinrichtung (insbesondere für jede Einzelsensoreinrichtung) charakteristische elektrische Größe bestimmt und/oder berechnet.

Die vorliegende Erfindung ist weiterhin auf ein Verfahren zum Erfassen von Objekten, insbesondere bei Ladeanordnungen zum Laden von elektrisch betriebenen Einrichtungen, mittels einer Erfassungseinrichtung gerichtet, wobei das Verfahren das Beaufschlagen wenigstens einer Einzelsensoreinrichtung (bevorzugt alle Einzelsensoreinrichtungen) aufweisend einen elektrischen Schaltkreis (insbesondere Schwingkreis), der wenigstens eine Erfassungsspule und/oder wenigstens einen Widerstand und/oder wenigstens einen Kondensator (bevorzugt mit wenigstens zwei Spulen und/oder wenigstens einem Kondensator) aufweist, (von einem Signalgenerator bzw. Frequenzgenerator) mit einer Wechselspannung und insbesondere mit einer Vielzahl verschiedener Wechselspannungen und das (jeweilige) Messen wenigstens einer für die Einzelsensoreinrichtung charakteristischen elektrischen Größe umfasst. Bevorzugt handelt es sich bei den elektrisch betriebenen Einrichtungen um mobile Einrichtungen und besonders bevorzugt um Fahrzeuge, etwa Kraftfahrzeuge. Insbesondere handelt es sich auch verfahrensseitig bei dem Objekt besonders bevorzugt um einen Fremdkörper, der nicht bestimmungsgemäß in der Umgebung des besagten Schaltkreises bzw. Schwingkreises ist. Bevorzugt handelt es sich bei der Vielzahl verschiedener Wechselspannungen um mindestens zwei verschiedene, insbesondere um mindestens vier, bevorzugt um mindestens sechzehn und besonders bevorzugt um mindestens 32 verschiedene Wechselspannungen. Bevorzugt handelt es sich bei der Vielzahl verschiedener Wechselspannungen um höchstens 300 verschiedene, bevorzugt um höchstens 128 verschiedene, bevorzugt um höchstens 64 verschiedenen und besonders bevorzugt um höchstens 32 verschiedene Wechselspannungen.

Im Folgenden wird die Wechselspannung, mit welcher wenigstens eine Einzelsensoreinrichtung (und bevorzugt eine Vielzahl oder alle Einzelsensoreinrichtungen) beaufschlagt wird, auch als Messwechselspannung und dessen Frequenz als Messfrequenz bezeichnet.

Erfindungsgemäß wird auf Grundlage von wenigstens einer gemessenen, charakteristischen elektrischen Größe und bevorzugt auf Grundlage von einer Vielzahl für die Einzelsensoreinrichtung gemessenen, charakteristischen elektrischen Größen wenigstens eine, bevorzugt für den elektrischen Schaltkreis charakteristische, Auswertegröße ermittelt.

Bevorzugt handelt es sich bei der Vielzahl elektrischer Größen um mindestens zwei, insbesondere um mindestens vier und besonders bevorzugt um wenigstens je eine elektrische Größe je verschiedener Wechselspannung, mit der diese Einzelsensoreinrichtung (innerhalb eines Messzyklus und bevorzugt innerhalb der vorgegebenen Messzeit, innerhalb der die (bzw. jede) Einzelsensoreinrichtung) beaufschlagt wurde oder wird. Bevorzugt ist die Vielzahl für die Einzelsensoreinrichtung gemessenen, charakteristischen elektrischen Größen (in ihrer Anzahl) identisch zu der Vielzahl verschiedener Wechselspannungen. Möglich ist allerdings, dass die Vielzahl der für die Einzelsensoreinrichtung gemessenen, charakteristischen elektrischen Größen, auf deren Grundlage wenigstens eine Auswertegröße ermittelt wird, (in ihrer Anzahl) kleiner ist als die Vielzahl verschiedener Wechselspannungen. Das bedeutet insbesondere, dass nicht alle gemessenen charakteristischen elektrischen Größen zur Ermittlung der Auswertegröße verwendet werden. Bevorzugt können etwa einige insbesondere nach vorgegebenen Kriterien ausgewählte gemessene charakteristische elektrische Größen bei der Ermittlung der Auswertegröße ausgeschlossen werden.

Weiterhin wird erfindungsgemäß in Abhängigkeit von der Auswertegröße (und bevorzugt wenigstens einer für die Einzelsensoreinrichtung charakteristischen Größe) festgestellt, ob in der Umgebung der Einzelsensoreinrichtung ein gegenüber dieser Einzelsensoreinrichtung bewegliches Objekt befindlich ist. Dabei sollen die im Rahmen der Ladeanordnung und der Erfassungseinrichtung beschriebenen Merkmale auch im Hinblick auf das Verfahren offenbart sein und umgekehrt diese Ladeanordnung und die Erfassungseinrichtung dazu geeignet und bestimmt, die beschriebenen Verfahrensschritte einzeln oder in Kombination auszuführen.

Nachfolgend wird die Ermittlung der Auswertegröße(n) lediglich in Bezug auf eine Einzelsensoreinrichtung beschrieben. Bevorzugt erfolgt die Ermittlung der Auswertegröße(n) für jede Einzelsensoreinrichtung eigenständig und besonders bevorzugt zeitlich nacheinander. Dabei soll die (auch nachfolgend) in Bezug auf eine Einzelsensoreinrichtung beschriebene Ermittlung der Auswertegröße(n) auch für mehrere und bevorzugt alle anderen Einzelsensoreinrichtungen als offenbart angesehen werden. Bevorzugt wird je Messzyklus für jede Einzelsensoreinrichtung (insbesondere sequentiell bzw. nacheinander) mindestens eine Auswertegröße ermittelt. Es ist möglich, dass aus wenigstens einer Auswertegröße, die zu einer oder mehreren Einzelsensoreinrichtungen ermittelt wurden, festgestellt wird, ob sich ein bewegliches Objekt in der Umgebung der Einzelsensoreinrichtung befindet.

Bevorzugt wird unter zwei verschiedenen Wechselspannungen verstanden, dass sich diese in wenigstens einem eine Wechselspannung charakterisierenden Parameter unterscheiden, beispielsweise in der Frequenz und/oder einer Amplitude und/oder der Art der Wechselspannung. Bevorzugt wird unter zwei verschiedenen Wechselspannungen verstanden, dass sich diese in ihrer Frequenz unterscheiden.

Bevorzugt unterscheidet sich die Vielzahl von verschiedenen Wechselspannungen paarweise voneinander. Bevorzugt unterscheidet sich die Vielzahl verschiedener Wechselspannungen in ihren Frequenzen (im Nachfolgenden auch als Messfrequenzen bezeichnet), welche besonders bevorzugt gleichmäßig über einen Frequenzbereich verteilt sind.

Bevorzugt erfolgt die Messung der (aller) für die Einzelsensoreinrichtung charakteristischen elektrischen Größe(n) an resonanzangepassten, induktiven Einzelsensoreinrichtungen. Die Messung der charakteristischen elektrischen Größen erfolgt daher jeweils bevorzugt (im Wesentlichen) nach dem Einschwingvorgang der Einzelsensoreinrichtung. Bevorzugt kann jedoch die Messung dieser charakteristischen elektrischen Größe während des Ladebetriebs erfolgen.

Bevorzugt wird (jeweils) aus der wenigstens einen bzw. den für die Einzelsensoreinrichtung charakteristischen, gemessenen elektrischen Größe(n) ein Streuparameter (bzw. ein Reflektionsfaktor) ermittelt.

Es wird also im Rahmen des erfindungsgemäßen Verfahrens vorgeschlagen, dass zur Ermittlung der Auswertegröße(n) die Streuparametermessergebnisse (oder. Reflektionsfaktormessungen) aus Messvorgängen an der Einzelsensoreinrichtung unter der Beaufschlagung dieser mit mindestens zwei verschiedenen Wechselspannungen verwendet werden. Dies bietet (im Unterschied zur Bestimmung einer Auswertegröße aus nur einem Messvorgang bzw. den zur lediglich einen Wechselspannung gehörenden gemessenen charakteristischen elektrischen Größen) den Vorteil, dass auf diese Weise statistische Messfehler berücksichtigt werden. Bevorzugt wird mit dem vorgeschlagenen Verfahren eine aus Messungen ermittelte Größe unter Berücksichtigung eines Messfehlers korrigiert.

Bevorzugt erfolgt die Beaufschlagung der Einzelsensoreinrichtung mit verschiedenen Wechselspannungen sequentiell bzw. zeitlich nacheinander. Bevorzugt erfolgt die Messung der (aller) für die Einzelsensoreinrichtung charakteristischen elektrischen Größe(n) und/oder die Messung der Streuparameter zyklisch, d.h. in fest vorgegebenen, sich bevorzugt wiederholenden und besonders bevorzugt konstanten Zeitabständen. Bevorzugt wird die und besonders bevorzugt wird jede Einzelsensoreinrichtung (von dem Signalgenerator) zyklisch mit Wechselspannung bzw. mit dem generierten Messsignal beaufschlagt. Beispielsweise kann diese Messung in einem Abstand von wenigstens 0,1 s, bevorzugt wenigstens 0,5 s und besonders bevorzugt 1 s und/oder in einem zeitlichen Abstand von maximal 10 s, bevorzugt maximal 5s und besonders bevorzugt maximal 1 s erfolgen.

Bei einem bevorzugten Verfahren wird die Auswertegröße auf Basis von wenigstens einem, für wenigstens ein Bauelement des elektrischen Schaltkreises charakteristischen elektrischen Kennwert in einem Referenzzustand ermittelt. Dabei kann es sich bei dem elektrischen Kennwert um eine zu der Auswertegröße korrespondierende Größe handeln. Beispielsweise kann es sich bei der Auswertegröße um eine für einen erfolgten Messbetrieb bzw. Messzustand (etwa während Beaufschlagung der Einzelsensoreinrichtung mit einer Wechselspannung) und dem elektrischen Kennwert um dieselbe Größe in einem (vorgegebenen) Referenzzustand handeln. So kann etwa für die Auswertegröße eine für die Induktivität der Erfassungsspule charakteristische Größe gewählt werden, die etwa von der momentanen Messsituation bzw. Messzustand abhängt, beispielsweise der Temperatur und/oder der Umgebung der Einzelsensoreinrichtung). In die Ermittlung der Auswertegröße ausgehend von den gemessenen, für die Einzelsensoreinrichtung charakteristischen elektrischen Größen geht sodann bevorzugt unter anderem ein Wert der Induktivität in einem Normalzustand bzw. Grundzustand (bei vorgegebenen äußeren Faktoren wie der Temperatur oder Umgebung der Einzelsensoreinrichtung) ein.

Bevorzugt handelt es sich bei der Auswertegröße um eine für den elektrischen Schaltkreis oder einen Teil des elektrischen Schaltkreis (der Einzelsensoreinrichtung) charakteristische Größe, welche bevorzugt im Wesentlichen unabhängig und besonders bevorzugt unabhängig von der Frequenz der Wechselspannung ist, mit der der Schaltkreis beaufschlagt wird, ist. Dabei kann es sich auch bevorzugt bei der Auswertegröße um einen frequenzunabhängigen Anteil einer an sich frequenzabhängigen, für den elektrischen Schaltkreis (oder einen Teil desselben) charakteristischen Größe handeln. Bevorzugt handelt es sich bei der Auswertegröße um eine charakteristische Größe für eine Größe, welche ausgewählt ist aus der Gruppe, welche eine Induktivität und/oder einen Widerstand und/oder eine Kapazität oder Kombinationen hiervon enthält. Bevorzugt handelt es sich bei der charakteristischen Größe um einen frequenzunabhängigen Anteil hiervon. Die Wahl einer frequenzunabhängigen Größe ist insbesondere bei einer frequenzübergreifenden Ermittlung dieser bei Wechselspannungen verschiedener Frequenz vorteilhaft.

Bei einem weiteren bevorzugten Verfahren handelt es sich bei der Auswertegröße um eine für ein Ersatzschaltbild eines oder mehrerer Bauelemente der Einzelsensoreinrichtung, bevorzugt der Erfassungsspule und/oder wenigstens eines kapazitiven Elements, charakteristische Größe. Bevorzugt handelt es sich bei der Auswertegröße um eine für ein Ersatzschaltbild einer Erfassungsspule und/oder einer Resonanzanpassungseinrichtung (nachfolgend auch Anpassnetzwerk genannt) und/oder einer Zuleitung des Schaltkreises bzw. der Einzelsensoreinrichtung (bzw. einer Zuleitung zu der Resonanzanpassungseinrichtung und/oder zu der Erfassungsspule) charakteristische Größe. Insbesondere kann es sich bei der Auswertegröße um einen Widerstandswert und/oder der Induktivität der Erfassungsspule (und/oder der Zuleitung und/oder der Resonanzanpassungseinrichtung) handeln (insbesondere um den jeweils frequenzunabhängigen Anteil).

Bei einem weiteren bevorzugten Verfahren werden wenigstens zwei und bevorzugt genau zwei Auswertegrößen ermittelt. Bevorzugt handelt es sich bei einer Auswertegröße um einen Widerstandswert der Erfassungsspule der Einzelsensoreinrichtung und bei der anderen um einen Induktivitätswert der Erfassungsspule. Denkbar wäre auch, dass es sich bei der Auswertegröße um einen komplexen Impedanzwert der Erfassungsspule handelt.

Bei einem weiteren bevorzugten Verfahren wird bzw. werden wenigstens eine Auswertegröße und bevorzugt alle Auswertegrößen durch einen Vergleich wenigstens einer auf Messungen von wenigstens einer für die Einzelsensoreinrichtung charakteristischen elektrischen Größe basierenden Messgröße mit einer Modellgröße, welche auf einer Modellierung der Einzelsensoreinrichtung basiert, ermittelt.

Bevorzugt wird zur Modellierung der Einzelsensoreinrichtung ein Ersatzschaltbild der Einzelsensoreinrichtung oder Teilen hiervon verwendet. Bevorzugt wird die Einzelsensoreinrichtung durch die Resonanzanpassungseinrichtung (bevorzugt nachfolgend auch Anpassnetzwerk genannt) und/oder die Erfassungsspule (bevorzugt im Nachfolgenden auch Sensorspule bezeichnet), insbesondere durch das Ersatzschaltbild der Resonanzanpassungseinrichtung und/oder der Erfassungsspule modelliert. Bevorzugt beinhaltet die Modellierung der Einzelsensoreinrichtung nicht die Zuleitung zu den Einzelsensoreinrichtungen bzw. zu der Einzelsensoreinrichtung. Mit anderen Worten werden die Zuleitungen zu den Einzelsensoreinrichtungen bevorzugt nicht in das Modell einbezogen. Möglich ist aber auch, bevorzugt optional, die Zuleitungen zu der Einzelsensoreinrichtung in dem Modell bzw. der Modellierung der jeweiligen Einzelsensoreinrichtung mit einzubeziehen. Dies könnte etwa in Abhängigkeit der Lage der Referenzebene der Messung und dem Umstand, ob die Kalibrierebene an der Auswerteeinrichtung oder den Einzelsensoreinrichtungen liegt, erfolgen.

Bevorzugt weist die (insbesondere die Modellierung der) Resonanzanpassungseinrichtung wenigstens einen und bevorzugt genau einen Parallelkondensator und wenigstens einen und bevorzugt genau einen Serienkondensator auf. Bevorzugt besteht die (insbesondere die Modellierung der) Resonanzanpassungseinrichtung aus einem Parallelkondensator und einem Serienkondensator. Bevorzugt werden Keramikkondensatoren insbesondere mit NP0-Dielektrikum und besonders bevorzugt ausreichend hoher Spannungsfestigkeit verwendet.

Bevorzugt weist die Modellierung der Erfassungsspule wenigstens und bevorzugt genau eine Induktivität und wenigstens einen und bevorzugt genau einen Widerstand auf. Bevorzugt wird die Erfassungsspule (jeweils) durch ein Serienersatzschaltbild, das (genau) einen Widerstand und (genau) eine Induktivität aufweist, dargestellt bzw. modelliert. Bevorzugt wird die Erfassungsspule als frequenzunabhängiges Element modelliert. Dies bietet den Vorteil eines möglichst einfachen Modells, was eine schnelle prozessorgestützte Auswertung ermöglicht.

Bevorzugt wird die Erfassungsspule allerdings als frequenzabhängiges Element modelliert. Dies bietet den Vorteil, dass parasitäre Effekte, wie die Kopplung zu benachbarten Einzelsensoreinrichtungen, verteilte Elemente und parasitäre Kapazitäten usw. berücksichtigt werden können und damit eine hohe Präzision erreicht werden kann.

Bevorzugt werden einige und bevorzugt alle Elemente bzw. Kennwerte bzw. Bauelemente, beispielsweise der Widerstand und/oder die Induktivität, der Erfassungsspule(n) (bzw. der Sensorspule(n)) in der Modellierung als frequenzabhängige Elemente berücksichtigt. Bevorzugt wird die Frequenzabhängigkeit der Serienelemente, also etwa die Frequenzabhängigkeit des Widerstands und/oder der Induktivität, der (jeder) Einzelsensoreinrichtung als Polynom approximiert. Bevorzugt kann ein niedrig-gradiges Polynom verwendet werden. Bevorzugt kann ein Polynom zweiten Grades und besonders bevorzugt ein Polynom dritten Grades (in der Frequenz) verwendet werden. Denkbar ist aber auch die Approximation durch höher-gradige Polynome.

Bevorzugt werden die Koeffizienten nullten Grades (der Potenzreihe bzw. des Polynoms) als Auswertegröße verwendet. Mit anderen Worten wird bevorzugt der Koeffizient nullten Grades des durch ein Polynom dritten Grades (in der Frequenz) angenäherten frequenzabhängigen Widerstands der Erfassungsspule als Auswertegröße verwendet. Alternativ oder zusätzlich kann bevorzugt der Koeffizient nullten Grades der durch ein Polynom dritten Grades (in der Frequenz) angenäherten frequenzabhängigen Induktivität der Erfassungsspule als Auswertegröße verwendet. Die Wahl dieser Auswertegröße bietet den Vorteil, dass diese Größen durch Messung in einem (vorgegebenen) Referenzzustand oder durch Messung im Grundzustand weitestgehend bekannt sind. Allerdings ändern sich diese primären Elemente (Koeffizienten nullten Grades) im laufenden Messbetrieb abhängig von einer Temperaturänderung oder der Anwesenheit bzw. Nähe eines Fremdobjekts.

Bevorzugt weist die Modellierung zusätzlich zu der Modellierung der Erfassungseinrichtung und der Resonanzanpassungseinrichtung eine Modellierung des Widerstands und der parasitären Induktivität der Zuleitung (bevorzugt zur Einzelsensoreinrichtung und insbesondere zur Resonanzanpassungseinrichtung) auf. Bevorzugt erfolgt basierend auf dieser Modellierung eine weitere Berechnung über die (komplexwertige) serielle (frequenzabhängige) Impedanz, die (komplexwertige) parallele (frequenzabhängige) Impedanz und die (komplexwertige) frequenzabhängige Impedanz der Erfassungsspule (insbesondere zusammengesetzt aus einem Widerstand und einem induktiven Anteil). Bevorzugt wird eine Eingangsimpedanz (der Einzelsensoreinrichtung) aus der parallelen Impedanz, der seriellen Impedanz und der Impedanz der Erfassungsspule ermittelt. Bevorzugt lässt sich der modellierte Reflektionsfaktor (unmittelbar) aus der Eingangsimpedanz ableiten.

Bevorzugt werden die Auswertegrößen in einem Referenzzustand und im Messbetrieb geschätzt bzw. ermittelt. Bevorzugt wird zur Ermittlung der Auswertegröße ein Wert der Auswertegröße in einem Referenzzustand bzw. in einem Grundzustand, der bevorzugt in einer Speichereinrichtung abgelegt ist, herangezogen und bevorzugt abgerufen. Dabei kann es sich allerdings auch um einen vorgegebenen Wert handeln. Bevorzugt handelt es sich bei dem Referenzzustand um eine Messung der Auswertegröße, welche bevorzugt bei Systemstart (der Ladeanordnung bzw. des Ladevorgangs) vorgenommen wird. Bevorzugt werden die Werte der Kapazitäten der Kondensatoren (der Resonanzanpassungseinrichtung) als konstant und (vorgegeben bzw. bekannt) angenommen. Bevorzugt werden auch die Koeffizienten ersten, zweiten und bevorzugt dritten und besonders bevorzugt höheren Grades der als Polynome angenäherte, frequenzabhängige Induktivität und/oder Widerstand der Erfassungsspule und/oder bevorzugt der Widerstand und/oder bevorzugt die Induktivität der Zuleitung als konstant und bevorzugt als bekannt angenommen. Besonders bevorzugt werden letztere Werte sowie die Werte dieser Koeffizienten in einem Referenzzustand, beispielsweise einem Grundzustand oder aber bei Systemstart, gemessen und bevorzugt sodann in einer Speichereinrichtung abgelegt.

Bei einem weiteren bevorzugten Verfahren wird (bzw. werden) die Auswertegröße(n) über ein numerisches Minimierungsverfahren und/oder ein iteratives Verfahren ermittelt, bei dem die Modellgröße schrittweise an die Messgröße angenähert wird. Bevorzugt wird als Modellgröße ein modellierter Reflektionsfaktor verwendet. Mit anderen Worten wird ein basierend auf der Modellierung der Einzelsensoreinrichtung ermittelter Reflektionsfaktor als Modellgröße verwendet. Als Messgröße wird bevorzugt der durch Messung wenigstens einer bzw. die für die Einzelsensoreinrichtung charakteristischen elektrischen Größe(n) ermittelte Reflektionsfaktor verwendet. Bevorzugt handelt es sich bei dem Reflektionsfaktor um einen Zeilenvektor, dessen Einträge durch die jeweiligen bei verschiedenen Wechselspannungen (bzw. bei den verschiedenen Messfrequenzen) gemessenen bzw. ermittelten und insbesondere zu berücksichtigenden Reflektionsfaktoren gegeben sind.

Bevorzugt wird als numerisches Minimierungsverfahren eine Minimierung der Summe der Fehlerquadrate verwendet. Dabei wird bevorzugt die Summe der jeweiligen Quadrate der Differenzen der modellierten Reflektionsfaktoren und der über Messungen ermittelten Reflektionsfaktoren bei den einzelnen, zu berücksichtigenden Wechselspannungen bzw. Messfrequenzen minimiert. Bevorzugt wird bei dem iterativen Verfahren als Startwert der Auswertegrößen für die Berechnung des modellierten Reflektionsfaktor ein in einem Referenzzustand oder in einem Grundzustand bestimmter Wert der Auswertegröße(n) verwendet.

Bevorzugt wird die Ermittlung unter der Annahme vorgenommen, dass die Messfehler unkorreliert sind und bevorzugt die gleiche Varianz aufweisen. Bevorzugt wird als iteratives Minimierungsverfahren das Gauß-Newton-Verfahren verwendet. Die Wahl des Gauß-Newton-Verfahrens bietet den Vorteil, dass hiermit nicht-lineare Minimierungsprobleme gelöst werden können. Bevorzugt werden für diese partielle Ableitungen des modellierten Reflektionsfaktors nach der Sensorimpedanz und/oder der parallelen Impedanz verwendet.

Bevorzugt wird die Iteration abgebrochen, sobald ein vorgegebenes Kriterium erfüllt ist, insbesondere eine vorgegebene Fehlerschranke bzw. Abweichung und/oder eine vorgegebene Maximalzahl an Iterationen erreicht ist. Bevorzugt kann die Fehlerschranke festgelegt werden.

Bei einem weiteren bevorzugten Verfahren werden die charakteristischen elektrischen Größen gewichtet. Bei einem weiteren bevorzugten Verfahren werden die Einträge der Differenz (des Differenz-Zeilenvektors) des modellierten Reflektionsfaktors und des durch Messungen ermittelten Reflektionsfaktors gewichtet. Insbesondere erfolgt eine Gewichtung über eine Matrix, bevorzugt über eine Diagonalmatrix, dessen Diagonaleinträge die Gewichtungsfaktoren enthalten. Bevorzugt werden die Gewichtungsfaktoren reziprok zur Varianz des jeweiligen Messfehlers (bei der zugehörigen Messfrequenz) gewählt. Dabei ist möglich, dass Messungen bei einzelnen Messfrequenzen bzw. Wechselspannungen vollständig ausgeblendet bzw. nicht berücksichtigt werden können. Bevorzugt werden bei einzelnen Messwerten vorliegende Ausreißer nicht oder entsprechend geringer gewichtet. Bevorzugt werden unsichere Messwerte ausgeschlossen.

Bei einem weiteren bevorzugten Verfahren wird die Gewichtung in Abhängigkeit von wenigstens einer für einen Ladevorgang der Ladeanordnung charakteristischen Ladegröße vorgenommen, wobei bevorzugt die Ladegröße mittels der Erfassungseinrichtung aus einer Messung ermittelt und/oder der Erfassungseinrichtung bereitgestellt wird. Bevorzugt handelt es sich bei der Ladegröße um eine (aktuelle) Frequenz (der Ladefrequenz) einer Wechselspannung, die für den Ladevorgang zur Energieübertragung verwendet wird.

Denkbar ist auch, dass die Gewichtung in Abhängigkeit von wenigstens einer für ein externes elektromagnetisches Feld und/oder für elektromagnetisches Feld, welches von einem durch die Beaufschlagung der Einzelsensoreinrichtung mit Wechselspannung erzeugten elektromagnetisches Feld verschieden ist, charakteristischen Größe vorgenommen wird. Dies bietet den Vorteil, dass externe Störsignale, welche durch die induktive Sensoranordnung in die Erfassungseinrichtung eingekoppelt werden, unterdrückt werden bzw. ermittelt und bevorzugt in der Auswertung oder der Ermittlung der Auswertegröße(n), insbesondere durch eine Gewichtung der Messergebnisse bei diesen Messfrequenzen, miteinbezogen werden können. Bevorzugt werden Störer bzw. Störsignale, die auf den und/oder in der Nähe der Messfrequenzen liegen, beispielsweise Vielfache der Ladefrequenz, unterdrückt. Dadurch wird vorteilhaft die Stabilität des Systems bzw. der Erfassungseinrichtung in einem realen Umfeld der induktiven Ladeanordnung erhöht.

Bevorzugt werden Messwerte, die in der Nähe von bzw. innerhalb eines vorgegebenen Abstands zu einer Harmonischen der bzw. wenigstens einer Ladefrequenz liegen, nicht oder entsprechend (geringer) gewichtet. Die Ladefrequenz kann dabei in einer Speichereinrichtung abgelegt sein und/oder gemessen bzw. bestimmt werden.

Bevorzugt wird eine Gewichtung in Abhängigkeit eines Signal-zu-Störverhältnisses vorgenommen. Unterschreitet beispielsweise ein Messwert ein vorgegebenes (definiertes) Signal-zu-Störverhältnis bei einer Messfrequenz, wird dieser Messwert nicht oder mit entsprechender Gewichtung bzw. entsprechender Wahl eines Gewichtungsfaktors zur Auswertung bzw. zur Ermittlung der Auswertegröße herangezogen.

Bevorzugt wird wenigstens eine für die Einzelsensoreinrichtung charakteristische elektrische Größe (insbesondere für eine und bevorzugt für jede Messfrequenz) gemessen, wobei die Einzelsensoreinrichtung nicht (durch den Signalgenerator) mit Wechselspannung beaufschlagt wird. Bevorzugt wird für jede Messfrequenz eine derartige charakteristische elektrische Größe gemessen. Hierdurch ist es vorteilhaft möglich, externe Störsignale bzw. Hintergrundsignale zu detektieren. Bevorzugt wird beispielsweise das Messsignal, mit dem die Einzelsensoreinrichtung beaufschlagt wird, bevorzugt kurzzeitig und besonders bevorzugt für einen vorgegebenen Zeitabschnitt ausgeschaltet. Dies bietet den Vorteil, dass die Erfassungseinrichtung in der Lage ist, eigenständig Störsignale von außen, also von einem externen Ladefeld zu erkennen und bevorzugt gegebenenfalls die entsprechenden Messfrequenzen ausblenden oder mittels Gewichtungsfaktoren gewichten kann.

Bevorzugt wird die Gewichtung bzw. wenigstens ein Gewichtungsfaktor in Abhängigkeit einer Bewertung wenigstens einer, während Nicht-Beaufschlagung der Einzelsensoreinrichtung mit Wechselspannung und/oder Spannung (durch den Signalgenerator), gemessenen, für die Einzelsensoreinrichtung charakteristischen elektrischen Größe vorgenommen, Bevorzugt basiert eine Gewichtung auf Grundlage einer Bewertung des reflektierten Signals, bei ausgeschaltetem Messsignal.

Bevorzugt erfolgt die Wahl der Gewichtung bzw. wenigstens eines Gewichtungsfaktors in Abhängigkeit von einem Verhältnis aus wenigstens einer unter Beaufschlagung einer Einzelsensoreinrichtung mit Wechselspannung gemessenen für diese Einzelsensoreinrichtung charakteristischen Größe und einer für dieselbe Einzelsensoreinrichtung charakteristischen Größe, welche gemessen wurde, während keine Beaufschlagung der Einzelsensoreinrichtung durch den Signalgenerator erfolgte. Bevorzugt erfolgt die Wahl der Gewichtung bzw. wenigstens eines Gewichtungsfaktors in Abhängigkeit davon, ob eine vorgegebene Schranke bzw. ein vorgegebener Grenzwert eingehalten und bevorzugt unterschritten ist. Bei Unterschreitung eines vorgegebenen Grenzwerts kann beispielsweise die entsprechende Messfrequenz durch Setzen des Gewichtungsfaktors auf 0 ausgeblendet oder entsprechend geringer gewichtet werden. Denkbar ist eine Wahl des Grenzwerts in dem Bereich zwischen 5 und 100 dB, bevorzugt zwischen 10 und 70 dB, bevorzugt zwischen 10 und 50 dB und besonders bevorzugt zwischen 20 und 40 dB. Damit kann bevorzugt eine adaptive Störsignalunterdrückung (bei der Ermittlung der Auswertegröße(n)) vorgenommen werden. Eine Gewichtung mittels der Wahl eines Gewichtungsfaktors je Messfrequenz bietet eine sehr flexible Anpassung an Störfelder bzw. ein Hintergrundrauschen und erlaubt in verschiedensten Umgebungen eine stabile und zuverlässige Funktionsweise der Erfassungseinrichtung bzw. Fremdobjekterkennung mit hoher Präzision und damit einen reibungslosen Ablauf eines Ladevorgangs der Ladeanordnung.

Bevorzugt erfolgt eine derartige Bestimmung eines Gewichtungsfaktors für jede Messfrequenz einzeln. Bevorzugt erfolgt eine derartige Bestimmung bzw. Wahl eines Gewichtungsfaktors und bevorzugt der Gewichtung zyklisch, bevorzugt in fest vorgegebenen Zeitabständen. Diese können gewählt sein aus einem Bereich zwischen 0.01 s und 10 s, bevorzugt zwischen 0.1 s und 5 s und besonders bevorzugt zwischen 0.5 s und 2 s, beispielsweise eine Sekunde. Bevorzugt wird diese Bestimmung der Gewichtung und/oder bevorzugt die Ermittlung der Auswertegröße(n) während des bzw. eines (laufenden) Ladevorgangs durchgeführt.

Bei einem weiteren bevorzugten Verfahren wird eine Rückflussdämpfung (Rückflussdämpfung = return loss) bestimmt, was dem unten noch genauer erläuterten Wert S11 entspricht. Daneben oder kumulativ kann auch die Durchgangsspannung berücksichtigt werden, welche sich aus dem unten noch genauer erläuterten Wert S21 ergibt. Es wird darauf hingewiesen, dass die hier erwähnten S- Parameter direkt mit dem Impedanzverhalten des Schwingkreises zusammenhängen so dass bei oder in der Umgebung der Resonanzfrequenz das signifikanteste S-Parameter-Verhalten auftritt.

Bei einem weiteren bevorzugten Verfahren wird eine Eigenfrequenz des Schwingkreises, insbesondere auch in Abhängigkeit von der Anwesenheit des zu erfassenden Objekts bestimmt.

Weitere Vorteile und Ausführungsformen ergeben sich aus den beigefügten Zeichnungen und deren Beschreibung, wobei in diesem Zusammenhang das Prinzip und der Aufbau für eine mögliche Realisierung einer Fremdobjekterkennung bzw. einer Erfassungseinrichtung bzw. eine Ausführungsform eines erfindungsgemäßen Verfahrens bzw. einer Ladeanordnung beschrieben wird.

Darin zeigen:

Fig. 1 eine Veranschaulichung der Streuparameter an einem Zweipol;
Fig. 2 eine schematische Darstellung einer Erfassungseinrichtung in einer Ausführungsform;
Fig. 3 eine schematische Darstellung einer Auswerteeinrichtung in einer Ausführungsform;
Fig. 4 eine schematische Darstellung einer Sensoreinrichtung in einer Ausführungsform;
Fig. 5 eine schematische Darstellung der Streuparametermessung an einer Einzelsensoreinrichtung in einer Ausführungsform;
Fig. 6a eine Darstellung des äquivalenten Serienwiderstands einer Sensorspule in Abhängigkeit der Frequenz;
Fig. 6b eine Darstellung der äquivalenten Serieninduktivität einer Sensorspule in Abhängigkeit der Frequenz;
Fig. 7 eine Ersatzschaltbild sowie ein vereinfachtes Ersatzschaltbild einer Einzelsensoreinrichtung;
Fig. 8a eine Darstellung des reflektierten störungsbehafteten Messsignals in Abhängigkeit der Frequenz;
Fig. 8b eine Darstellung des reflektierten Signals bei ausgeschaltetem Messsignal in Abhängigkeit der Frequenz;
Fig. 8c eine Darstellung des Signal-zu-Störverhältnisses in Abhängigkeit der Frequenz; und
Fig. 8d eine beispielhafte Darstellung der Wahl der Gewichtungsfaktoren in Abhängigkeit der Frequenz.

1.1 Messprinzip:

Im vorliegenden System erfolgt die Charakterisierung der elektrischen Sensoreigenschaften durch die vektorielle Messung von Streuparametern an zweipoligen Sensoren.

Streuparameter, die einen Zweipol bzw. ein Eintor beschreiben, beschränken sich auf $S_{11}$ äquivalent zum Reflektionsfaktor $\Gamma$. Er beschreibt das Verhältnis von reflektierter Welle $b_i$ zur hinlaufenden Welle $a_i$ und charakterisiert vollständig die linearen Eigenschaften eines Eintors. Der Reflektionsfaktor kann ohne Einschränkungen auf die Eingangsimpedanz eines Eintors umgerechnet werden. Die gängige Darstellung dieser Größe erfolgt im Frequenzbereich. Für jede Messfrequenz $\omega_i$ existiert folglich ein komplexer Wert des Reflektionsfaktors bestehend aus Betrag und Phase

$$S_{11} \triangleq \Gamma = f\{\omega\} = \Gamma(\omega_i) \triangleq \Gamma_i = |\Gamma_i| \cdot e^{i \cdot \arg(\Gamma_i)}$$

$$= \frac{b(\omega_i)}{a(\omega_i)} = \frac{b_i}{a_i} = \frac{|b_i|}{|a_i|} \cdot e^{i \cdot [\arg(b_i) - \arg(a_i)]}$$

Die Auswertung der Messsignale basiert auf der oben beschriebenen Änderung der elektrischen Sensoreigenschaften (bzw. der Änderung der elektrischen Eigenschaften der Sensoreinrichtung 10 bzw. der Einzelsensoreinrichtungen 43), die folglich eine Änderung der gemessenen Reflektionsfaktoren ergeben. Durch die Definition geeigneter Auswerteparameter wäre es möglich, Rückschlüsse auf Fremdobjekte, bzw. deren Größe, Lage und deren Material zu ziehen und damit die Funktion einer Fremdobjekterkennung zu erfüllen.

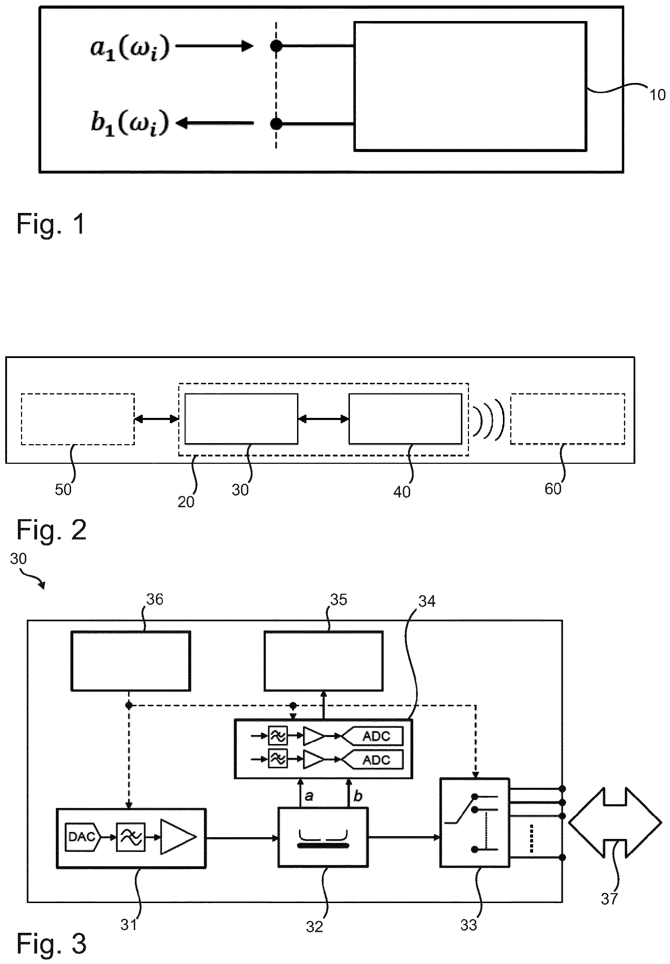

In Fig. 1 ist eine Veranschaulichung der Streuparameter $a_i(\omega_i), b_i(\omega_i)$ an einem Zweipol bzw. Sensor-Zweipol 10 (welcher etwa Teil einer Sensoreinrichtung 40 sein kann) gezeigt.

1.2 Design und Aufbau:

Das FOD-System 20 (bzw. auch Erfassungseinrichtung 20) (FOD- Foreign Object Detection - Fremdobjekterkennung), dargestellt in Figur 2, ist bevorzugt in eine Auswerteelektronik 30 (bzw. Auswerteeinrichtung 30, wobei die Auswerteeinrichtung 30 im Nachfolgenden auch als Auswerteelektronik bezeichnet wird) und eine induktive Sensoreinheit 40 (bzw. Sensoreinrichtung 40, welche im Nachfolgenden auch als Sensoreinheit bezeichnet ist) aufzuteilen. Die bevorzugte Funktion und der bevorzugte Aufbau der einzelnen Komponenten soll im Folgenden näher beschrieben werden.

Dabei steht bevorzugt die Auswerteelektronik 30 in Kommunikationsverbindung mit einer (übergeordneten) Steuereinheit 50 bzw. einer (übergeordneten) Steuerungseinrichtung 50. Über die Sensoreinrichtung 40 kann bevorzugt ein Objekt in dem sich an die Steuerungseinrichtung 50 anschließenden überwachten Raum 60 erfasst werden.

1.2.1 Auswerteelektronik:

Die Auswerteelektronik 30 bildet bevorzugt den Kern des Systems und enthält die komplette Funktionalität, um eine definierte Anzahl $N_{Sensoren}$ an induktiven Sensoren 43 (welche auch als Einzelsensoreinrichtungen 43 bezeichnet werden) bevorzugt nacheinander zu vermessen und Rückschlüsse auf eventuell vorkommende Fremdobjekte schließen zu können. Sie bildet außerdem die Schnittstelle zu den weiteren Systemkomponenten des induktiven Ladesystems, um Meldungen über Erkennungsereignisse weiter geben zu können.

Die Auswerteelektronik 30 (vgl. Figur 3) besteht aus folgenden Funktionsblöcken:

- Signalerzeugung 31: Erzeugung, Anpassung in Amplitude und Frequenz (Filterung und Verstärkung) der Messsignale

- Signaltrennung 32: Auskoppelung von Signalen proportional der vor- und rücklaufenden Wellengrößen a und b, Durchleitung von Messsignal

- Signalverteilung 33 (bzw. Schalteinrichtung): Verteilung des Messsignals (1: $N_{Sensoren}$) zur Vermessung mehrerer Sensorfelder nacheinander im Multiplexbetrieb

- Signalmessung 34 (bzw. bevorzugt auch als Messeinrichtung bezeichnet): Signalkonditionierung (Filterung, Verstärkung) der ausgekoppelten Wellengrößen, Digitalisierung der Wellengrößen a und b

- Signalverarbeitung 35: Digitale Filterung, Fehlerkorrektur, Berechnung der Reflektionsfaktoren Γ, Auswertung relevanter Parameter zur Detektion von Fremdobjekten, ...

- Steuerungseinheit 36: Ablaufsteuerung von Signalerzeugung, -messung, und Durchschalten der einzelnen Sensorfelder, Kommunikation mit übergeordneter Steuereinheit, Benutzerschnittstelle

- Sensorschnittstelle 37: Bildet die bevorzugt die Schnittstelle zur induktiven Sensoreinheit, leitet bevorzugt die Messsignale der einzelnen Sensoren (bzw. Einzelsensoreinrichtungen 43) von und zur Auswerteelektronik

1.2.2 Induktive Sensoreinheit:

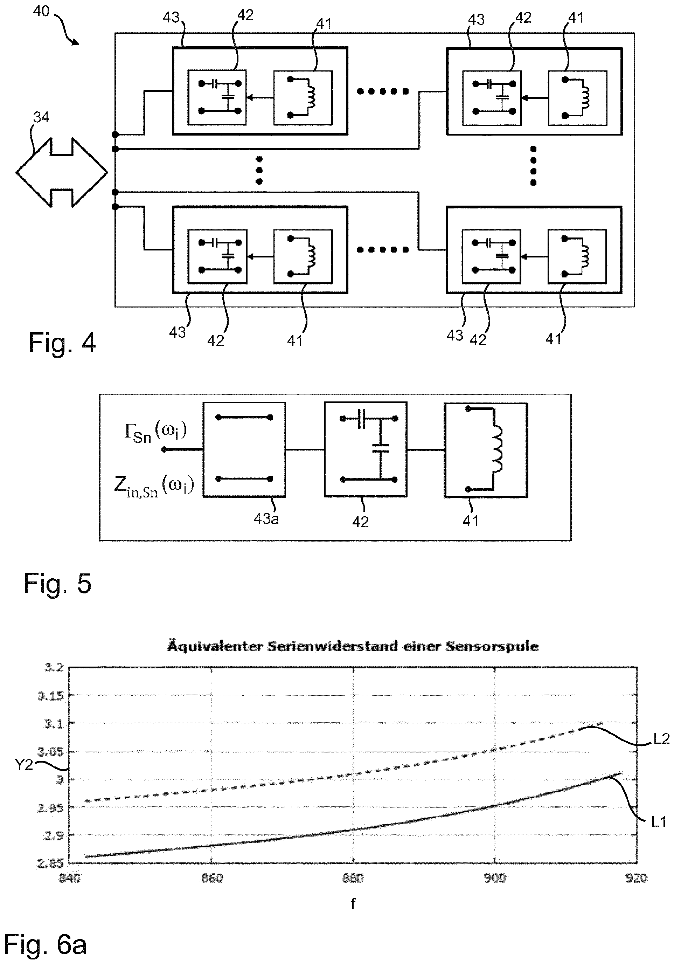

Die induktive Sensoreinheit 40 in Abbildung 4 stellt die eigentlichen Sensoren bereit. Die gesamte Einheit besteht aus einer definierten Anzahl an insbesondere planaren gedruckten Induktivitäten 41 bzw. Spulen 41, die zusammen die gesamte zu erfassende Oberfläche abdecken. Resonanzanpassungen 42 sind bevorzugt mit den Sensorspulen verbunden (Filterwirkung, Leistungsanpassung Sensor,...).

Figur 4 zeigt ein Blockschaltbild der Sensoreinheit bzw. Sensoreinrichtung 40.

Die Kombination aus Induktivität und Resonanzanpassung bildet Einzelsensor(-einrichtung)/en 43, die im Folgenden auch als Sensorfelder bezeichnet werden. Form, Größe und Zusammensetzung dieser Sensorspulen bestimmen das erzeugte magnetische Feld und somit auch den Raum, in dem Fremdobjekte erkannt werden können. Jedes Feld ist separat mit der Auswerteelektronik verbunden, bevorzugt über eine Schnittstelle 34. Die Sensorfelder werden während eines Messvorgangs einzeln nacheinander mit einem Messsignal angeregt und vermessen.

1.2.3 Schnittstellen:

- Übergeordnete Steuereinheit - Auswerteelektronik: Es existiert bevorzugt eine übergeordnete Steuereinheit, die auf Basis der definierten Auswerteparameter Entscheidungen über die Erkennung von Fremdobjekten und folglich das Abschalten des Ladesystems treffen kann. Diese leitungsgebundene Kommunikationsschnittstelle dient zur zyklischen Abfrage von Auswerteparametern der Sensoren, relevanten Systemparametern,...

- Induktive Sensoreinheit - überwachter Raum: Das Umfeld der induktiven Sensoren bildet einen definierten überwachten Raum. Die physikalische Schnittstelle zu diesem Raum, bzw. zu den zu erkennenden Fremdobjekten bildet das von den Sensorfeldern erzeugte Magnetfeld. Es breitet sich über das vorherrschende Medium zwischen Fremdobjekt und Sensor drahtlos aus. Es handelt im vorliegenden System somit um ein "kontaktloses" Sensorsystem (Fremdobjekt muss GA (Ground Assembly - Bodeneinheit des induktiven Ladesystems) nicht berühren!).

1.2.4 Messablauf:

Da ein Messkanal, jedoch mehrere Sensorfelder existieren, ist es bevorzugt nötig, die Sensorfelder im Zeitmultiplexbetrieb zu vermessen.

Jedes Sensorfeld wird bevorzugt in einer definierten Zeit $T_{Mess}$ vermessen. Zusätzlich wird zwischen den Messungen einzelner Sensorfelder eine definierte Pause $T_{Pause}$ eingehalten (Multiplexer umschalten, digitalisierte Werte zwischenspeichern, Einschwingvorgang nächstes Sensorfeld). Die Gesamtzeit für einen Messzyklus, also die einmalige Vermessung aller Sensoren, ergibt sich somit zu

$$T_{Zyklus} = (T_{Mess} + T_{Pause}) \cdot N_{Sensoren}$$

Ein Sensorfeld, das die Beeinflussung durch ein Fremdobjekt erfährt, ist im schlechtesten Fall also erst nach der Zeit $T_{Zyklus}$ mit Sicherheit vermessen. $T_{Zyklus}$ bestimmt also im Wesentlichen die Reaktionszeit des Systems. Werden in einer späteren Verarbeitung die Messwerte zusätzlich gemittelt oder gefiltert, erhöht sich die Reaktionszeit zusätzlich um einen Faktor.

Das Messsystem ist derart ausgelegt, das die komplette Verarbeitung der aufgenommenen Daten von $Feld_n$ in der Zeit der Aufnahme der Daten von $Feld_{n+1}$ erfolgt. Da außer die oben beschriebenen Zeiten keine weiteren Pausen- oder Verzögerungszeiten anfallen, kann von einem Echtzeitmesssystem mit definierter Reaktionszeit gesprochen werden.

2 Parameterschätzung - Schätzung der HW-Elemente des induktiven Sensors

Wie in 1.1 beschrieben, basiert das System auf der Messung des Reflektionsfaktors Γ von resonanzangepassten induktiven Sensoren 43. Die primäre funktionale Anforderung ist das Erkennen von Fremdobjekten auf der Oberfläche des Sensors. Dazu ist es notwendig, passende Auswerteparameter zu definieren, die als Grundlage zur Auswertung dienen können. Die elektrischen Kennwerte eines passenden Ersatzschaltbildes des induktiven Sensors scheinen hierbei als bestmögliche Basis für eine Fremdobjekterkennung.

Das Ziel kann daher definiert werden, als Zugriff auf physikalische Eigenschaften des Sensors zu erhalten, um bestmögliche Entscheidungen bzgl. eines Ereignisses treffen zu können. Bevorzugt kann dabei unterschieden werden, ob es sich um ein Fremdobjekt oder um eine Änderung der Umweltbedingungen handelt.

Folgende Betrachtungen beruhen auf der Annahme, dass systematische Messfehler, z.B. durch eine fehlerbehaftete Auswerteschaltung weitestgehend vermieden werden. Sämtliche Messgrößen sind lediglich durch einen zufälligen additiven Messfehler überlagert. Das nachfolgend beschriebene Konzept der Parameterschätzung umfasst bevorzugt nicht die Behandlung systematischer Fehler. Ergebnisse würden unter Einfluss derartiger Fehler massiv verfälscht bzw. ungültig.

2.1 Grundlagen zum vorliegenden Messsystem

Im Folgenden eine kurze Zusammenfassung der theoretischen Grundlagen, die als Basis für den Parameterschätzer im Fremdobjekterkennungssystem dienen.

2.1.1 Mathematische Beziehungen, Notation

- Skalare werden im Folgenden normal, Vektoren **fett** gedruckt
- Variablen sind allgemein komplexwertig, Einschränkung: Bauteilparameter R,L,C, Frequenzen $f$, $\omega$
- Skalarprodukt eines N-dimensionaler Vektoren: $\langle \boldsymbol{v}, \boldsymbol{w} \rangle = \sum_{n=1}^{N} \bar{v}_n w_n$ ($\bar{v}_n$ ist dabei konjugiert Komplexe von $v_n$)
- Euklidische Norm oder L$^2$-Norm (entspricht Länge eines Vektors):

$$\|v\|_2 = \sqrt{\langle \boldsymbol{v}, \boldsymbol{v} \rangle} = \sqrt{\sum_{n=1}^{N} \bar{v}_n v_n} = \sqrt{\sum_{n=1}^{N} |v_n|^2}$$

$$\|v - w\|_2 = \sqrt{\langle \boldsymbol{v} - \boldsymbol{w}, \boldsymbol{v} - \boldsymbol{w} \rangle} = \sqrt{\sum_{n=1}^{N} |v_n - w_n|^2}$$

- Geschätzte Parameter werden mit "Dach" dargestellt. z.B.:

  ○ $L$ ist der wahre Wert einer Induktivität
  ○ $\hat{L}$ der geschätzte und evtl. fehlerbehaftete Wert dieser Induktivität

- Notation partielle Ableitungen: $\frac{\partial}{\partial x}\{y\} \triangleq \partial_x y$

2.1.2 Streuparametermessungen (bzw. Reflektionsfaktormessungen)

Die Messung der Streuparameter erfolgt über $I$ gleichmäßig verteilte Messfrequenzen $\omega_i$ an einem Sensorfeld Sn. Es stehen die frequenzabhängigen, komplexwertigen Reflektionsfaktoren $\Gamma^D$,

$$\Gamma_{Sn}^{D}(\omega_i) = \Gamma_{Sn}^{MOD}(\omega_i) + e_{Sn}(\omega_i)$$

$$\triangleq \Gamma_{Sn,i}^{D} = \Gamma_{Sn,i}^{MOD} + e_{Sn,i}$$

$\Gamma$      Reflektionsfaktor, entspricht Streuparameter $S_{11}$
$e$      Messfehler oder **F**ehlerterm, hier Modellierung als AWGN-Messrauschen
$D$      ermittelte Größe am Sensorfeld, überlagert durch zufällige Fehler
$MOD$      ideale Größe am Sensorfeld, bzw. des Modell des Sensorfeldes
$i$      Index Messfrequenz $\omega_i$, $i = \{1,2,...,I\}$
$Sn$      Sensorfeld $n = \{1,2, ..., N\}$

überlagert durch einen zufälligen Fehler e zur Verfügung. Die Unterscheidung für verschiedene Sensorfelder $Sn$ soll im Folgenden zur Vereinfachung vernachlässigt werden. Es ergibt sich dadurch $\Gamma_i^D = \Gamma_i^{MOD} + e_i$. Weiterhin kann obiger Zusammenhang für alle Messfrequenzen als Vektor dargestellt werden:

$$\begin{pmatrix} \Gamma_1^D \\ \vdots \\ \Gamma_I^D \end{pmatrix} = \begin{pmatrix} \Gamma_1^{MOD} \\ \vdots \\ \Gamma_I^{MOD} \end{pmatrix} + \begin{pmatrix} e_1 \\ \vdots \\ e_I \end{pmatrix} = \boldsymbol{\Gamma^D} = \boldsymbol{\Gamma^{MOD}} + \boldsymbol{e}$$

Der Reflektionsfaktor $\Gamma$ und die Eingangsimpedanz Z können durch folgende Gleichung problemlos ineinander umgerechnet werden:

$$\Gamma = \frac{Z - Z_{ref}}{Z + Z_{ref}} \quad und \quad Z = \frac{1 + \Gamma}{1 - \Gamma}, \qquad Z_{ref} = 50\Omega$$

2.1.3 Systemmodellbildung

Ein Sensorfeld bildet, wie in Figur 5 dargestellt, die eigentliche Sensorspule 41 und ein Netzwerk 42 zur Resonanzanpassung, (insbesondere auch bezeichnet als Anpassnetzwerk bzw. als Resonanzanpassung 42). Je nach Lage der Referenzebene der Messung (wo liegt die Kalibrierebene, an Auswerteschaltung oder an Sensoren?) scheint es sinnvoll, die Zuleitungen 43a zu den Sensorfeldern 43 in ein Modell miteinzubeziehen.

Figur 5 illustriert die Messung des Reflektionsfaktors an dem angepassten Sensor. Das Anpassnetzwerk 42 besteht hier aus einem Parallel- und einem Serienkondensator (mit den Kapazitäten $C_{match,p}$ und $C_{match,s}$). Die Größen der Resonanzkondensatoren (insbesondere des wenigsten einen Parallelkondensators und des wenigsten einen Serienkondensators) sind bevorzugt bis auf eine Toleranz (abhängig von Bauteilauswahl) bekannt. Durch passende Bauteilauswahl werden deren Parameter bevorzugt weitestgehend stabil gehalten.

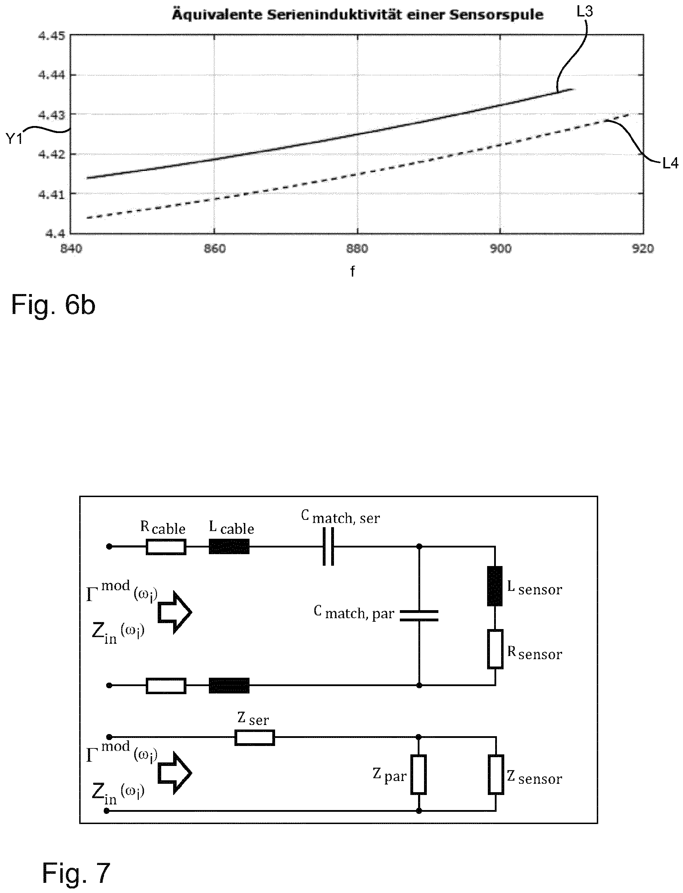

Um minimale Komplexität zu erhalten, sollen die Sensorspulen bevorzugt als Serienersatzschaltbild, bevorzugt bestehend aus Widerstand $R_{sensor}$ und Induktivität $L_{sensor}$ dargestellt werden. Von der Präzision dieses ESBs hängt die spätere Genauigkeit der Schätzung maßgeblich ab. Es erscheint jedoch möglich, dass aufgrund parasitärer Effekte, wie Kopplung zu benachbarten Sensorspulen, verteilte Elemente, parasitäre Kapazitäten, usw. eine Modellierung als frequenzunabhängige Elemente nicht ausreicht. Impedanzmessungen von Sensorspulen, bei denen die Nachbarspulen resonanzangepasst sind, bestätigen diese Annahme (vgl. Fig. 6a u. 6b) welche ein Serienersatzschaltbild unter dem Einfluss eines Objekts bzw. Temperatur illustriert. Figur 6a zeigt dabei den äquivalenten Serienwiderstand Y2 (aufgetragen in der Einheit $\Omega$) einer Sensorspule in Abhängigkeit der Frequenz f (aufgetragen in der Einheit kHz). Figur 6b zeigt dabei die äquivalente Serieninduktivität Y1 (aufgetragen in der Einheit $\mu$F) einer Sensorspule in Abhängigkeit der Frequenz f (aufgetragen in der Einheit kHz). Die durchgezogene Linie in Fig. 6a repräsentiert dabei den Graph des Sensorwiderstands $R_{sensor}$ im Grundzustand. Dagegen stellt die gestrichelte Linie in Fig. 6a den Graph des Sensorwiderstands $R_{sensor}$ mit Fremdobjekt dar. In ähnlicher Weise repräsentiert die durchgezogene Linie in Fig. 6b den Graph der Sensorinduktivität $L_{sensor}$ im Grundzustand, während die gestrichelte Linie in Fig. 6b den Graph der Sensorinduktivität $L_{sensor}$ mit Fremdobjekt darstellt.). Aus diesem Grund werden die Serienelemente hier bevorzugt als Polynom 3. Grades approximiert:

$$R_{sensor} = R_{sensor,0} + r_{sensor,1} \cdot \omega + r_{sensor,2} \cdot \omega^2 + r_{sensor,3} \cdot \omega^3$$

$$L_{sensor} = L_{sensor,0} + l_{sensor,1} \cdot \omega + l_{sensor,2} \cdot \omega^2 + l_{sensor,3} \cdot \omega^3$$

Die Kennwerte eines Serienersatzschaltbilds der Sensorspulen seien durch Messung im Grundzustand weitestgehend bekannt. Vor allem die primären Elemente $R_{sensor,0}$ und $L_{sensor,0}$ ändern sich jedoch im laufenden Messbetrieb (abhängig von Änderung Temperatur, Fremdobjekt,...) um wenige Prozent, wie in den Figuren 6a und 6b beispielsweise zu erkennen.

(Anmerkung: Die Polynomapproximation bedeutet zwar einen höheren Rechenaufwand, sie erhöht jedoch die Komplexität des Modells im Wesentlichen nicht, da die Serienstruktur erhalten bleibt. Die Modellierung des realen des Sensors würde eine reale verteilte Induktivität und mehrere reale Übertrager beinhalten, was eine weitere Berechnung unmöglich machen würde.)

Zusätzlich zur Sensorspule und Anpassnetzwerk soll bevorzugt noch der Widerstand und die parasitäre Induktivität der Zuleitung, modelliert durch $R_{cable}$ und $L_{cable}$ berücksichtigt werden. Insgesamt ergibt sich das Ersatzschaltbild (ESB) aus der oberen Darstellung der Figur 7. Die einzelnen Elemente können zu den komplexen, frequenzabhängigen Impedanzen $Z_{ser}(\omega_i)$, $Z_{par}(\omega_i)$ und $Z_{sensor}(\omega_i)$, bzw. zu Vektoren

$$\mathbf{Z}_{ser} = \begin{pmatrix} Z_{ser}(\omega_1) \\ \vdots \\ Z_{ser}(\omega_I) \end{pmatrix}, \quad \mathbf{Z}_{par} = \begin{pmatrix} Z_{par}(\omega_1) \\ \vdots \\ Z_{par}(\omega_I) \end{pmatrix} \quad und \quad \mathbf{Z}_{sensor} = \begin{pmatrix} Z_{sensor}(\omega_1) \\ \vdots \\ Z_{sensor}(\omega_I) \end{pmatrix}$$

zusammengefasst werden, sodass das vereinfachte Ersatzschaltbild in der unteren Darstellung in Fig. 7 entsteht. Die einzelnen Impedanzen berechnen sich zu:

$$Z_{ser}(\omega_i) \qquad = R_{cable} + i \left( \omega_i L_{cable} - \frac{1}{\omega_i C_{match,ser}} \right)$$

$$Z_{par}(\omega_i) \qquad = \frac{-i}{\omega_i C_{match,par}}$$

$$Z_{sensor}(\omega_i) \quad = R_{sensor} + i\omega_i L_{sensor}$$

$$= R_{sensor,0} + i\omega_i L_{sensor,0} +$$

$$\omega_i \left[ \left( r_{sensor,1} + r_{sensor,2}\omega_i + r_{sensor,3}\omega_i{}^2 \right) + i\omega_i \left( l_{sensor,1} + l_{sensor,2}\omega_i + l_{sensor,3}\omega_i{}^2 \right) \right]$$

$$= Z_{sensor,0}(\omega_i) + \omega_i z_{sensor}(\omega_i)$$

Damit ergibt sich eine Eingangsimpedanz von

$$Z_{in} = \frac{Z_{sensor}Z_{par}}{Z_{sensor} + Z_{par}} + Z_{ser}, \qquad \boldsymbol{Z_{in}} = \begin{pmatrix} Z_{in}(\omega_1) \\ \vdots \\ Z_{in}(\omega_I) \end{pmatrix}$$

Der modellierte Reflektionsfaktor lässt sich daraus mit obigen Gleichungen durch

$$\Gamma^{MOD} = \frac{Z_{in} - 50\Omega}{Z_{in} + 50\Omega}$$

$$= \frac{\dfrac{Z_{sensor}Z_{par}}{Z_{sensor} + Z_{par}} + Z_{ser} - 50\Omega}{\dfrac{Z_{sensor}Z_{par}}{Z_{sensor} + Z_{par}} + Z_{ser} + 50\Omega}$$

$$= \frac{\dfrac{(Z_{sensor,0} + \omega_i z_{sensor})Z_{par}}{Z_{sensor,0} + \omega_i z_{sensor} + Z_{par}} + Z_{ser} - 50\Omega}{\dfrac{(Z_{sensor,0} + \omega_i z_{sensor})Z_{par}}{Z_{sensor,0} + \omega_i z_{sensor} + Z_{par}} + Z_{ser} + 50\Omega}$$

$$= \frac{\dfrac{(R_{sensor} + i\omega_i L_{sensor} + \omega_i z_{sensor})\dfrac{-i}{\omega_i C_{match,par}}}{R_{sensor} + i\omega_i L_{sensor} + \omega_i z_{sensor} + \dfrac{-i}{\omega_i C_{match,par}}} + R_{cable} + i\left(\omega_i L_{cable} - \dfrac{1}{\omega_i C_{match,ser}}\right) - 50\Omega}{\dfrac{(R_{sensor} + i\omega_i L_{sensor} + \omega_i z_{sensor})\dfrac{-i}{\omega_i C_{match,par}}}{R_{sensor} + i\omega_i L_{sensor} + \omega_i z_{sensor} + \dfrac{-i}{\omega_i C_{match,par}}} + R_{cable} + i\left(\omega_i L_{cable} - \dfrac{1}{\omega_i C_{match,ser}}\right) + 50\Omega}$$

mit $z_{sensor} = r_{sensor,1} + r_{sensor,2}\omega_i + r_{sensor,3}\omega_i^2 + i\omega_i(l_{sensor,1} + l_{sensor,2}\omega_i + l_{sensor,3}\omega_i^2)$ berechnen.

2.2 Herausforderung

Die grundsätzliche Herausforderung besteht darin, einen deterministischen Zusammenhang zwischen den zur Verfügung stehenden Reflektionsfaktoren $\Gamma^D_{Sn}(\omega_i)$ und passenden Auswerteparametern herzustellen. Im vorliegenden System stellen diese die Parameter des Ersatzschaltbildes aus Fig. 7 dar.

2.2.1 Klassifizierung der Parameter

Da diese teilweise bekannt/unbekannt, veränderlich/konstant sind, sollen sie im Folgenden klassifiziert werden.

| Eigenschaft | Parameter | Folge |
|---|---|---|
| unbekannt, veränderlich oder konstant | keine | keine Aktion notwendig |
| **bekannt** bis auf Toleranz durch Bauteilauswahl, weitestgehend **konstant** | $C_{match,s/p}$, | • Fall1: Toleranz ausreichend gering → keine Aktion notwendig<br>• Fall2: Toleranz zu groß → Parameterschätzung evtl. bei Systemstart notwendig |
| **bekannt** durch Messung in Grundzustand, weitestgehend **konstant** | $r_{sensor,i}$ $l_{sensor,i}$ $R$/ $L_{cable}$ | keine Aktion notwendig, gehen einfach in Berechnungen mit ein |
| **bekannt** durch Messung in Grundzustand, **veränderlich** = hier Auswerteparameter | $R_{sensor,0}$ $L_{sensor,0}$ | Parameterschätzung bei Systemstart UND im Messbetrieb notwendig |

Im vorliegenden System sind also die Parameter $R_{sensor,0}$ und $L_{sensor,0}$ zu schätzen → $\hat{R}_{sensor,0}$, $\hat{L}_{sensor,0}$. Gegebenenfalls werden bevorzugt die Parameter $C_{match,s/p}$ miteinbezogen. In einem ersten Ansatz sollen die Werte der Resonanzkondensatoren jedoch als konstant und bekannt angenommen werden. Die Modellfunktion des Reflektionsfaktors ist damit darstellbar als

$$\Gamma^{MOD} \triangleq \Gamma^{MOD}(\omega_i; R_{sensor,0}, L_{sensor,0})$$

2.2.2 Auswahl Parameterschätzer

Bei der Auswahl eines passenden Schätzverfahrens werden folgende Aspekte beachtet:

- Es besteht ein kausaler Zusammenhang zwischen den Bauteilwerten des ESBs und den Messwerten.
- Modellierung des Systems möglich (erfolgt in 2.1.3)
- Es wird angenommen, dass die Messfehler $e(\omega_i)$ unkorreliert sind und gleiche Varianz besitzen. Die Abweichungen gegenüber dem Modellsystem müssen eine Normalverteilung bilden.

Parameterschätzung im Fall des vorliegenden FOD-Systems kann wie folgt beschrieben werden:
**"Passe die zu schätzenden Parameter in einer Art und Weise an, dass sich das modellierte System $\Gamma^{MOD}$ und die Messwerte $\Gamma^D$ möglichst gut decken"**

Es handelt sich daher eher um eine Approximierung von $\Gamma^{MOD}$ um $\Gamma^D$. Der Einfluss des Messfehlers soll dabei so gering wie möglich gehalten werden. Das Kriterium zur Bestimmung der Approximation sollte so gewählt werden, dass große Abweichungen der Modellfunktion von den Messdaten stärker gewichtet werden als kleine. Sofern keine Lösung ganz ohne Abweichungen möglich ist, dann ist der Kompromiss mit der insgesamt geringsten Abweichung das beste allgemein gültige Kriterium. Dazu wird gewöhnlich die Summe der Fehlerquadrate (engl. "Least Squares Error"), die auch als Fehlerquadratsumme bezeichnet wird, als die Summe der quadrierten Differenzen zwischen den Werten der Modellkurve $\Gamma^D(\omega_i)$ und den Daten $\Gamma^{MOD}(\omega_i; R_{sensor,0}, L_{sensor,0})$ definiert:

$$\sum_{i=1}^{I} \left| \Gamma^D(\omega_i) - \Gamma^{MOD}(\omega_i; R_{sensor,0}, L_{sensor,0}) \right|^2$$

Es sollen dann diejenigen Parameter $\hat{R}_{sensor,0}$, $L_{sensor,0}$ ausgewählt, bzw. geschätzt werden, bei denen die Summe der Fehlerquadrate minimal wird:

$$\{\hat{R}_{sensor,0} \ \hat{L}_{sensor,0}\} = \underset{\{R_{sensor,0}, L_{sensor,0}\}}{\arg \min} \ \sum_{i=1}^{I} \left|\Gamma^D(\omega_i) - \Gamma^{MOD}(\omega_i; R_{sensor,0}, L_{sensor,0})\right|^2$$

$$= \underset{\{R_{sensor,0}, L_{sensor,0}\}}{\arg \min} \ \left\|\boldsymbol{\Gamma^D} - \boldsymbol{\Gamma^{MOD}}\right\|_2^2$$

Wie genau dieses Minimierungsproblem gelöst wird, hängt von der Art der Modellfunktion ab. Im vorliegenden Fall handelt es sich um ein nichtlineares Problem, da $\Gamma^{MOD}$ nicht als Linearkombination von $R_{sensor,0}$, $L_{sensor,0}$ darstellbar ist (siehe letzte Gleichung 2.1.3).

2.2.3 Iterative Minimierung durch Gauß-Newton

Das Gauß-Newton-Verfahren ist ein numerisches Verfahren zur Lösung nichtlinearer Minimierungsprobleme, die, wie hier, durch Anwendung der Methode der kleinsten Quadrate auf nichtlineare Ausgleichsprobleme entstehen. Es hat eigentlich den Nachteil, dass die Konvergenz und das Finden eines globalen Minimums im Allgemeinen nicht gesichert ist. Vorliegendes System beinhaltet jedoch den Vorteil, dass sich die gesuchten Parameter $\hat{R}_{sensor,0}$ $\hat{L}_{sensor,0}$ im Messbetrieb relativ gering ändern, bzw. bei Systemstart relativ gut bekannt sind. Dadurch können Startwerte gewählt werden, die schnelle Konvergenz sichern.

Das nichtlineare Problem wird bei diesem Verfahren in ein iterativ zu lösendes lineares Problem überführt.

2.2.4 Partielle Ableitungen der Modellfunktion

Im Folgenden sollen die evtl. benötigten partiellen Ableitungen der Funktion

$$\Gamma^{MOD}(\omega_i) = \frac{\dfrac{(Z_{sensor,0} + \omega_i z_{sensor})Z_{par}}{Z_{sensor,0} + \omega_i z_{sensor} + Z_{par}} + Z_{ser} - 50\Omega}{\dfrac{(Z_{sensor,0} + \omega_i z_{sensor})Z_{par}}{Z_{sensor,0} + \omega_i z_{sensor} + Z_{par}} + Z_{ser} + 50\Omega}$$

bezüglich $Z_{sensor,0}$, und $Z_{par}$ berechnet werden. Diese werden für die Durchführung des Gauß-Newton Verfahrens benötigt:

$$\frac{\partial \Gamma^{MOD}(\omega_i)}{\partial Z_{sensor,0}} = \partial_{Z_{sensor,0}} \Gamma^{MOD}(\omega_i) = 100\Omega \cdot \left(\frac{Z_{par}}{K}\right)^2$$

$$\frac{\partial \Gamma^{MOD}(\omega_i)}{\partial Z_{par}} = \partial_{Z_{par}} \Gamma^{MOD}(\omega_i) = 100\Omega \cdot \left(\frac{Z_{sensor,0} + \omega_i z_{sensor}}{K}\right)^2$$

$$\frac{\partial \Gamma^{MOD}(\omega_i)}{\partial Z_{ser}} = \partial_{Z_{ser}} \Gamma^{MOD}(\omega_i) = 100\Omega \cdot \left(\frac{Z_{sensor,0} + \omega_i z_{sensor} + Z_{par}}{K}\right)^2$$

mit $K = \omega_i z_{sensor}(Z_{ser} + 50\Omega + Z_{par}) + Z_{ser}(Z_{sensor,0} + Z_{par}) + 50\Omega(Z_{sensor,0} + Z_{par}) + Z_{sensor,0}Z_{par}$

bzw. $K = Z_{par}(Z_{ser} + \omega_i z_{sensor} + Z_{sensor,0} + 50\Omega) + (Z_{ser} + 50\Omega)(\omega_i z_{sensor} + Z_{sensor,0})$

Darstellung als Vektoren:

$$\partial_{Z_{sensor,0}}\boldsymbol{\Gamma}^{MOD} = \begin{pmatrix} \partial_{Z_{sensor,0}}\Gamma^{MOD}(\omega_1) \\ \vdots \\ \partial_{Z_{sensor,0}}\Gamma^{MOD}(\omega_I) \end{pmatrix}, \qquad \partial_{Z_{par}}\boldsymbol{\Gamma}^{MOD} = \begin{pmatrix} \partial_{Z_{Z_{par}}}\Gamma^{MOD}(\omega_1) \\ \vdots \\ \partial_{Z_{Z_{par}}}\Gamma^{MOD}(\omega_I) \end{pmatrix}$$

### 3 Algorithmus

#### 3.1 Schätzung Sensorparameter

Zur Bestimmung der gesuchten Parameter $\hat{R}_{sensor,0}$ $\hat{L}_{sensor,0}$ geht man nach folgendem Schema vor. Als Vereinfachung wird hier ein Weg gewählt, nicht zwei reale Parameter, sondern einen komplexen Parameter $\hat{Z}_{sensor,0} = \hat{R}_{sensor,0} + i2\pi\omega_{mean}\hat{L}_{sensor,0}$, mit $\omega_{mean} = mean\{\omega_i\}$ zu schätzen.

#### 3.1.1 Vorbereitung

- **gegeben** ist die Modellfunktion $\Gamma^{MOD}(\omega_i)$ bzw. dessen Zeilenvektor $\boldsymbol{\Gamma^{MOD}}$ mit den $I$ Variablen $\omega_1, ...,\omega_I$ und dem zu schätzenden Parameter $Z_{sensor,0}$
  (vgl. 2.1.3)
- **gegeben** sind die Messwerte $\Gamma^D(\omega_i)$ bzw. deren Zeilenvektor $\boldsymbol{\Gamma^D}$
  (vgl. 2.1.2)
- **gegeben** sind die bekannten Parameter $C_{match,s/p}$, sowie $r_{sensor,i}$ $l_{sensor,i}$ und $R/L_{cable}$
  (vgl. 2.2.1)
- **festlegen** der Startwerte $\hat{R}_{sensor,0}[0]$ und $\hat{L}_{sensor,0}[0]$ für die gesuchten Parameter Das Verfahren divergiert bei ungünstiger Wahl der Startwerte. Vorteil hier: Relativ gute Wahl durch bekannte Elemente möglich,
  (vgl. 2.2.1)
- **berechnen** des Startwerts $\hat{Z}_{sensor,0}[0] = \hat{R}_{sensor,0}[0] + i2\pi\omega_{mean}\hat{L}_{sensor,0}[0]$
- **berechnen** des Startwerts von $\boldsymbol{\Gamma^{MOD}}[0]$ durch bekannte Parameter und Startwerte
- **berechnen** des Zeilenvektors der partiellen Ableitung der Modellfunktion $\Gamma^{MOD}$ nach dem zu schätzenden Parameter $\hat{Z}_{sensor,0}[0]$, $\partial_{\boldsymbol{Z_{sensor,0}}}\boldsymbol{\Gamma^{MOD}}$ durch bekannte Parameter und Startwerte
  (vgl. 2.2.4)
- **aufbauen** der Jacobi-Matrix $\boldsymbol{D} = (\partial_{Z_{sensor,0}}\boldsymbol{\Gamma^{MOD}})$
  (Spalten von D werden gebildet durch Zeilenvektoren der partiellen Ableitungen der zu schätzenden Parameter, da hier aber genau ein komplexwertiger Parameter gesucht wird, entspricht die Matrix einem Vektor. Der allgemeine Fall soll hier jedoch nicht komplett vernachlässigt werden)
- **festlegen** einer Fehlerschranke c, die größer Null sein muss. Je kleiner die Fehlerschranke c, umso genauer wird die Lösung und umso mehr Iterationen werden benötigt. Vorsicht: Wenn Fehlerschranke unter Berechnungsgenauigkeit liegt, keine Konvergenz möglich.

#### 3.1.2 Iteration

1. Die n. Iteration wird mit folgender Gleichung durchgeführt:

$$\hat{Z}_{sensor,0}[n+1] = \hat{Z}_{sensor,0}[n] + (\boldsymbol{D}^H\boldsymbol{D})^{-1}\boldsymbol{D}^H(\boldsymbol{\Gamma^D} - \boldsymbol{\Gamma^{MOD}})$$

Dabei wird in jedem Schritt $\hat{Z}_{sensor,0}[n]$ verbessert. Anmerkungen:

a. Da $(\boldsymbol{D}^H \cdot \boldsymbol{D})^{-1}$ symmetrisch und positiv definit ist, eignet sich die sog. Cholesky-Zerlegung besonders gut für die Auflösung des Gleichungssystems.
b. Berechnen von

$$\hat{R}_{sensor,0}[n+1] = real(\hat{Z}_{sensor,0}[n+1])$$

$$\hat{L}_{sensor,0}[n+1] = \frac{imag(\hat{Z}_{sensor,0}[n+1])}{2\pi\omega_{mean}}, \quad \omega_{mean} = mean\{\omega_i\}$$

2. Neu berechnen von $\Gamma^{MOD}$ und **D** durch $\hat{R}_{sensor,0}[n+1]$ und $\hat{L}_{sensor,0}[n+1]$

3. Die Iteration wird abgebrochen, falls $|\hat{Z}_{sensor,0}[n+1] - \hat{Z}_{sensor,0}[n]| < c$, oder eine Maximalanzahl an Iterationen erreicht ist.

**Hinweis:** Um den Rechenaufwand zu verringern, kann auch mehrfach ohne Neuberechnung iteriert werden. Dieses Vorgehen reduziert aber die Konvergenzgeschwindigkeit und sollte erst angewendet werden, wenn sich $\hat{R}_{sensor,0}$ und $\hat{L}_{sensor,0}$ nur wenig ändert.

3.1.3 Erweiterung - Weighted Least Squares (= adaptive Störsignalfilterung)

Es sollte beachtet werden, dass die Methode der kleinsten Quadrate unter bestimmten ungünstigen Bedingungen völlig unerwünschte Ergebnisse liefern kann. Beispielsweise sollten keine Ausreißer in den Messwerten vorliegen, da diese das Schätzergebnis verzerren (Anforderung gleiche Varianz und Normalverteilung der Messfehler nicht mehr erfüllt). Im hier beschriebenen System können Ausreißer entstehen, wenn Vielfache der Frequenz des magnetischen Ladefelds auf, oder in die Nähe einer Messfrequenz fallen (z.B. 10 · $85kHz \approx \omega_i$).

Das Minimierungsproblem aus wird bevorzugt mit einer Diagonalmatrix **W** erweitert gewichtet.

$$\{\hat{R}_{sensor,0} \ \hat{L}_{sensor,0}\} = \underset{\{R_{sensor,0}, L_{sensor,0}\}}{\arg\min} \|\mathbf{W}(\mathbf{\Gamma^D} - \mathbf{\Gamma^{MOD}})\|_2^2, \qquad W = \begin{pmatrix} w_1 & 0 & \cdots & 0 \\ 0 & w_2 & \cdots & 0 \\ \vdots & \vdots & \ddots & \vdots \\ 0 & 0 & \cdots & w_I \end{pmatrix}$$

W stellt dabei eine Gewichtungsmatrix mit den einzelnen (realen) Gewichtungsfaktoren $w_i$ dar. Die Lösung des Weighted Least Squares Verfahren ist dann:

$$\hat{Z}_{sensor,0}[n+1] = \hat{Z}_{sensor,0}[n] + (\mathbf{D^H W D})^{-1}\mathbf{D^H W}(\mathbf{\Gamma^D} - \mathbf{\Gamma^{MOD}})$$

Wird an Stelle der Gewichtungsmatrix eine Einheitsmatrix eingesetzt, vereinfacht sich das Problem und somit auch die Lösung wieder zu den Gleichungen in 3.1.2. Für das Finden der richtigen Gewichtungen existieren verschiedene Verfahren im Folgenden kurz angeschnitten werden:

- Gewichtungen $w_i$ werden reziprok zur Varianz $\sigma_i^2$ des Messfehlers $e_i$:

$$w_i = \frac{1}{\sigma_i^2}, \qquad \sigma_i = E\{|e_i - \mu_i|^2\}$$

   Die Varianz ist in mathematischer Hinsicht bevorzugt als mittlere quadratische Abweichung einer (Zufalls-)Variablen von ihrem Erwartungswert definiert. Insbesondere ist sie das Quadrat der Standardabweichung.

- Nach der ersten Berechnung der Schätzwerte wird geprüft, ob Ausreißer in einzelnen Messwerten vorliegen. Diese Messwerte werden dann ausgeschieden (z.B. $w_i$ = 0) und die Schätzwerte erneut berechnet. Dieses Verfahren eignet sich dann, wenn nur wenige Ausreißer im Verhältnis zur gesamten Datenbasis vorliegen. Stichwort "Robust Least Squares"

- Es existiert eine weitere Informationsbasis, die es erlaubt, unsichere Messwerte von vorne herein auszuschließen.

Beispiele:

1. Das FOD-System erhält Informationen über die aktuelle Ladefrequenz. Dadurch kann die Harmonische dieser Frequenz berechnet werden, die mit einer Messfrequenz $w_i$ zusammen fällt (oder nahe einer oder mehreren Messfrequenzen liegt). Dieser Messwert kann dann dementsprechend gewichtet oder ausgeschieden werden.

2. Das vorliegende FOD-System ist eigenständig in der Lage, Störsignale von außen, also vom externen Ladefeld oder sonstigen Störern zu erkennen und ggf. die entsprechende Messfrequenz auszublenden.

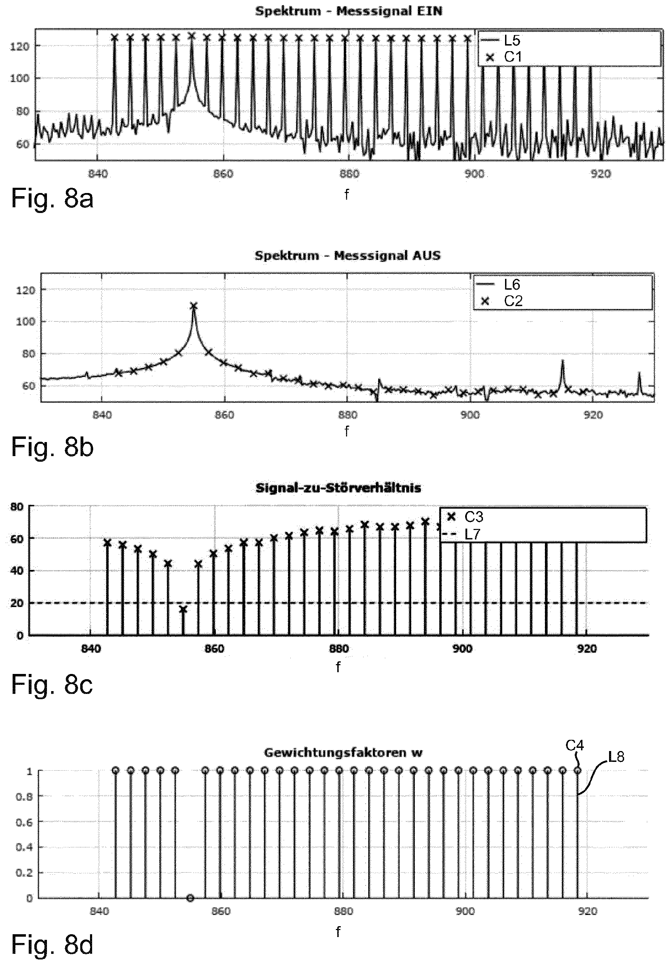

Dazu kann zum Beispiel das Messsignal des FOD-Systems kurzzeitig ausgeschaltet werden und das Spektrum des reflektierten Signals $b(\omega)$ bewertet werden. Fig. 8a ("Spektrum - Messsignal Ein") zeigt beispielsweise das reflektierte störungsbehaftete Messsignal L5. Aufgetragen ist in Figur 8a das Spektrum $|b(\omega)|$ in Einheiten [dB] gegen die Frequenz in Einheiten [kHz]. Es enthält 32 Töne etwa im Bereich von 840 - 920 kHz mit einer Amplitude von jeweils etwa 125 dB (absoluter Bezug fehlt hier). L5 kennzeichnet dabei das gesamte Spektrum, während die mit C1 gekennzeichneten Kreuze die relevanten Messfrequenzen kennzeichnen.

Das Signal in Fig. 8b ("Spektrum - Messsignal AUS"), gekennzeichnet durch das Bezugszeichen L6, zeigt wiederum das reflektierte Signal $b(\omega)$ in Abhängigkeit von der Frequenz f [kHz], jedoch mit ausgeschaltetem Messsignal, das jetzt nur noch externe Störkomponenten enthält. Aufgetragen ist in Figur 8b $|b(\omega)|$ in Einheiten [dB] gegen die Frequenz in Einheiten [kHz]. Das Bezugszeichen C2 kennzeichnet die relevanten Messfrequenzen. Im Bereich 855 kHz ist dabei eine störende Komponente bei etwa 110 dB enthalten. Ein passendes Entscheidungskriterium könnte nun beispielsweise sein, die 6. Messfrequenz $\omega_6$ bei etwa 855 kHz durch Setzen des Gewichtungsfaktors $w_6 = 0$ ausblenden (vgl. Fig. 8d, welche die Wahl der Gewichtungsfaktoren $w_i$ in Abhängigkeit der Frequenz f [kHz] zeigt), da eine Störabstandsmarge von beispielsweise 20 dB unterschritten wurde (Fig. 8c). Dieser Vorgang kann beispielsweise zyklisch (z.B. 1x pro Sekunde) im laufenden Ladebetrieb durchgeführt werden.

Figur 8c zeigt ein Signal-zu-Störverhältnis [dB] in Abhängigkeit der Frequenz [kHz]. Darin ist mit dem Bezugszeichen L7 eine minimale Störabstandsmarge gekennzeichnet. Dieser Figur 8c kann entnommen werden, dass etwa die durch C3 gekennzeichneten Störabstandsmargen (bei den einzelnen Messfrequenzen) mit Ausnahme der Störabstandsmarge der sechsten Messfrequenz die minimale Störabstandsmarge L7 überschreiten.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

**Bezugszeichenliste**

| | |
|---|---|
| 10 | Sensor-Zweipol |
| 20 | Erfassungseinrichtung, Fremdkörpererkennungseinrichtung |
| 30 | Auswerteeinrichtung; Auswerteelektronik |
| 31 | Signalgenerator, Signalerzeugung |
| 32 | Signaltrennung |
| 33 | Signalverteilung |
| 34 | Signalmessung |
| 35 | (digitale) Signalverarbeitung |
| 36 | Steuerungseinheit |
| 37 | Sensorschnittstelle |
| 38 | analoge Verarbeitung |
| 39 | Referenzebene Mess |
| 40 | Sensoreinrichtung, induktive Sensoreinheit |
| 41 | (planare, gedruckte) Induktivitäten |
| 42 | Resonanzanpassungen |
| 43 | Einzelsensoreinrichtung, Einzelsensor, Sensorfeld |
| 50 | (übergeordnete Steuereinheit), Steuerungseinrichtung |
| 60 | Umgebung, überwachter Raum |
| C1, C2 | relevante Messfrequenzen |
| C3 | Störabstandsmarge |
| C4 | Gewichtungsfaktor |
| L5, L6 | gesamtes Spektrum |

L7        minimale Störabstandsmarge
f          Frequenz [kHz]
Y1        Induktivität
Y2        Widerstand

**Patentansprüche**

1. Verfahren zum Erfassen von Objekten bei Ladeanordnungen (1) zum Laden von elektrisch betriebenen Einrichtungen mittels einer Erfassungseinrichtung (20), wobei wenigstens eine Einzelsensoreinrichtung (43) aufweisend einen elektrischen Schaltkreis, der wenigstens eine Erfassungsspule (41) und/oder wenigstens einen Widerstand und/oder wenigstens einen Kondensator aufweist, mit einer Vielzahl von verschiedenen Wechselspannungen beaufschlagt wird und jeweils wenigstens eine für die Einzelsensoreinrichtung (43) charakteristische elektrische Größe ($a_i$, $b_i$) gemessen wird,
**dadurch gekennzeichnet, dass**
auf Grundlage einer Vielzahl für die Einzelsensoreinrichtung (43) gemessenen, charakteristischen elektrischen Größe(n) ($a_i$, $b_i$) wenigstens eine, bevorzugt für den elektrischen Schaltkreis charakteristische, Auswertegröße ($R_{sensor,0}$, $L_{sensor,0}$) ermittelt wird, wobei in Abhängigkeit von der Auswertegröße ($R_{sensor,0}$, $L_{sensor,0}$) festgestellt wird, ob in der Umgebung der Einzelsensoreinrichtung (43) ein gegenüber dieser Einzelsensoreinrichtung (43) bewegliches Objekt befindlich ist.

2. Verfahren nach wenigstens einem der vorangegangenen Ansprüche,
**dadurch gekennzeichnet, dass**
die Auswertegröße ($R_{sensor,0}$, $L_{sensor,0}$) auf Basis von wenigstens einer, für wenigstens ein Bauelement des elektrischen Schaltkreises charakteristischen, elektrischen Kennwert ($R_{sensor,0}$, $L_{sensor,0}$) in einem Referenzzustand ermittelt wird.

3. Verfahren nach wenigstens einem der vorangegangenen Ansprüche,
**dadurch gekennzeichnet, dass**
es sich bei der Auswertegröße ($R_{sensor,0}$, $L_{sensor,0}$) um eine für ein Ersatzschaltbild eines oder mehrerer Bauelemente der Einzelsensoreinrichtung, bevorzugt der Erfassungsspule (41) und/oder wenigstens eines kapazitiven Elements, charakteristische Größe handelt.

4. Verfahren nach wenigstens einem der vorangegangenen Ansprüche,
**dadurch gekennzeichnet, dass**
wenigstens zwei Auswertegrößen ($R_{sensor,0}$, $L_{sensor,0}$) ermittelt werden.

5. Verfahren nach wenigstens einem der vorangegangenen Ansprüche,
**dadurch gekennzeichnet, dass**
wenigstens eine Auswertegröße und bevorzugt alle Auswertegrößen ($R_{sensor,0}$, $L_{sensor,0}$) durch einen Vergleich wenigstens einer auf Messungen von wenigstens einer für die Einzelsensoreinrichtung (43) charakteristischen elektrischen Größe ($a_i$, $b_i$) basierenden Messgröße ($\Gamma^D(\omega_i)$) mit einer Modellgröße ($\Gamma^{MOD}$), welche auf einer Modellierung der Einzelsensoreinrichtung (43) basiert, ermittelt wird bzw. werden.

6. Verfahren nach dem vorangegangenen Anspruch,
**dadurch gekennzeichnet, dass**
die Auswertegröße(n) ($R_{sensor,0}$, $Z_{ensor,0}$) über ein numerisches Minimierungsverfahren und/oder ein iteratives Verfahren ermittelt wird bzw. werden, bei dem die Modellgröße ($\Gamma^{MOD}$) schrittweise an die Messgröße ($\Gamma^D(\omega_i)$) angenähert wird.

7. Verfahren nach wenigstens einem der beiden vorangegangenen Ansprüche,
**dadurch gekennzeichnet, dass**
die charakteristischen elektrischen Größen ($a_i$, $b_i$) gewichtet werden.

8. Verfahren nach dem vorangegangenen Anspruch,
**dadurch gekennzeichnet, dass**
die Gewichtung in Abhängigkeit von wenigstens einer für einen Ladevorgang der Ladeanordnung (1) charakteristischen Ladegröße vorgenommen wird, wobei bevorzugt die Ladegröße mittels der Erfassungseinrichtung (20) aus einer Messung ermittelt und/oder der Erfassungseinrichtung (20) bereitgestellt wird.

9. Ladeanordnung (1) zum Laden von elektrisch betriebenen Einrichtungen mit einer Primärspule, welche dazu geeignet und bestimmt ist, ein magnetisches Feld zu erzeugen, um elektrische Energie induktiv auf eine Sekundärspule, welche Bestandteil der elektrisch betriebenen Einrichtung ist, zu übertragen, wobei die Ladeanordnung (1) eine Erfassungseinrichtung (20) zum Erfassen von Objekten aufweist, wobei die Erfassungseinrichtung (20) wenigstens einen Signalgenerator (31), welcher dazu geeignet und bestimmt ist, wenigstens eine Einzelsensoreinrichtung (43) aufweisend einen elektrischen Schaltkreis, der wenigstens eine Erfassungsspule und/oder wenigstens einen Widerstand und/oder wenigstens einen Kondensator aufweist, mit verschiedenen Wechselspannungen zu versorgen, und eine Auswerteeinrichtung (30) aufweist, die dazu geeignet und bestimmt ist, jeweils wenigstens eine für die Einzelsensoreinrichtung (43) charakteristische elektrische Größe ($a_i$, $b_i$) zu erfassen,
**dadurch gekennzeichnet, dass**
die Erfassungseinrichtung dazu geeignet und bestimmt ist, auf Grundlage einer Vielzahl für die Einzelsensoreinrichtung (43) unter Beaufschlagung mit verschiedenen Wechselspannungen gemessenen, charakteristischen elektrischen Größen ($a_i$, $b_i$) wenigstens eine, bevorzugt für den elektrischen Schaltkreis charakteristische, Auswertegröße ($R_{sensor,0}$, $L_{sensor,0}$) zu ermitteln, wobei die Erfassungseinrichtung dazu geeignet und bestimmt ist, in Abhängigkeit von der Auswertegröße ($R_{sensor,0}$, $L_{sensor,0}$) festzustellen, ob in der Umgebung (60) der Einzelsensoreinrichtung (43) ein gegenüber dieser Einzelsensoreinrichtung (43) bewegliches Objekt befindlich ist.

10. Erfassungseinrichtung (20) zum Erfassen von Objekten, wobei die Erfassungseinrichtung (20) wenigstens einen Signalgenerator (31), welcher dazu geeignet und bestimmt ist, wenigstens eine Einzelsensoreinrichtung (43) aufweisend einen elektrischen Schaltkreis, der wenigstens eine Erfassungsspule und/oder wenigstens einen Widerstand und/oder wenigstens einen Kondensator aufweist, mit verschiedenen Wechselspannungen zu versorgen, und eine Auswerteeinrichtung (30) aufweist, die dazu geeignet und bestimmt ist, jeweils wenigstens eine für die Einzelsensoreinrichtung (43) charakteristische elektrische Größe ($a_i$, $b_i$) zu erfassen,
**dadurch gekennzeichnet, dass**
die Erfassungseinrichtung dazu geeignet und bestimmt ist, auf Grundlage einer Vielzahl für die Einzelsensoreinrichtung (43) unter Beaufschlagung mit verschiedenen Wechselspannungen gemessenen, charakteristischen elektrischen Größe(n) ($a_i$, $b_i$) wenigstens eine, bevorzugt für den elektrischen Schaltkreis charakteristische, Auswertegröße ($R_{sensor,0}$, $L_{sensor,0}$) zu ermitteln, wobei die Erfassungseinrichtung dazu geeignet und bestimmt ist, in Abhängigkeit von der Auswertegröße ($R_{sensor,0}$, $L_{sensor,0}$) und bevorzugt wenigstens einer für die Einzelsensoreinrichtung (43) charakteristischen Größe ($a_i$, $b_i$) festzustellen, ob in der Umgebung (60) der Einzelsensoreinrichtung (43) ein gegenüber dieser Einzelsensoreinrichtung (43) bewegliches Objekt befindlich ist.

$$a_1(\omega_i) \longrightarrow$$

$$b_1(\omega_i) \longleftarrow$$

10

## Fig. 1

50    20    30    40    60

## Fig. 2

30

36    35    34

DAC

a    b

ADC

ADC

31    32    33    37

## Fig. 3

**Fig. 4**

**Fig. 5**

Äquivalenter Serienwiderstand einer Sensorspule

**Fig. 6a**

**Äquivalente Serieninduktivität einer Sensorspule**

Fig. 6b

Fig. 7

**Spektrum - Messsignal EIN**

Fig. 8a

**Spektrum - Messsignal AUS**

Fig. 8b

**Signal-zu-Störverhältnis**

Fig. 8c

**Gewichtungsfaktoren w**

Fig. 8d

**Europäisches Patentamt**
**European Patent Office**
**Office européen des brevets**

# EUROPÄISCHER RECHERCHENBERICHT

**Nummer der Anmeldung**

EP 19 19 0456

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/015329 A1 (WIDMER HANSPETER [CH] ET AL) 16. Januar 2014 (2014-01-16) | 1-6,9,10 | INV. B60L53/124 H02J50/60 |
| Y | * Zusammenfassung; Abbildungen 1, 12-18 * | 7,8 | |
| Y | US 2014/111019 A1 (ROY ARUNANSHU MOHAN [US] ET AL) 24. April 2014 (2014-04-24) * Absatz [0240] - Absatz [0247] * | 7,8 | |
| A | US 2016/187520 A1 (WIDMER HANS PETER [CH] ET AL) 30. Juni 2016 (2016-06-30) * Zusammenfassung; Abbildungen 12,13,15 * | 1-10 | |
| A | DE 10 2017 101982 A1 (ZOLLNER ELEKTRONIK AG [DE]) 2. August 2018 (2018-08-02) * Zusammenfassung; Abbildungen 11,12 * | 1-10 | |

**RECHERCHIERTE SACHGEBIETE (IPC)**

B60L
H02J

Der vorliegende Recherchenbericht wurde für alle Patentansprüche erstellt

| Recherchenort | Abschlußdatum der Recherche | Prüfer |
|---|---|---|
| Den Haag | 10. Dezember 2019 | Arias Pérez, Jagoba |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 19 0456

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-12-2019

| Im Recherchenbericht angeführtes Patentdokument | Datum der Veröffentlichung | Mitglied(er) der Patentfamilie | Datum der Veröffentlichung |
|---|---|---|---|
| US 2014015329 A1 | 16-01-2014 | AR 092856 A1 | 06-05-2015 |
| | | AR 094820 A1 | 02-09-2015 |
| | | CN 104428692 A | 18-03-2015 |
| | | CN 104521151 A | 15-04-2015 |
| | | EP 2872928 A1 | 20-05-2015 |
| | | EP 2873160 A2 | 20-05-2015 |
| | | EP 3588791 A1 | 01-01-2020 |
| | | JP 6266616 B2 | 24-01-2018 |
| | | JP 2015533273 A | 19-11-2015 |
| | | JP 2018078794 A | 17-05-2018 |
| | | TW 201409063 A | 01-03-2014 |
| | | TW 201415064 A | 16-04-2014 |
| | | TW 201543063 A | 16-11-2015 |
| | | US 2014015329 A1 | 16-01-2014 |
| | | US 2014015522 A1 | 16-01-2014 |
| | | US 2017328740 A1 | 16-11-2017 |
| | | WO 2014011776 A2 | 16-01-2014 |
| | | WO 2014011788 A1 | 16-01-2014 |
| US 2014111019 A1 | 24-04-2014 | CN 104885327 A | 02-09-2015 |
| | | CN 109969007 A | 05-07-2019 |
| | | CN 109995149 A | 09-07-2019 |
| | | EP 2909912 A2 | 26-08-2015 |
| | | JP 6397417 B2 | 26-09-2018 |
| | | JP 2016502385 A | 21-01-2016 |
| | | JP 2018207775 A | 27-12-2018 |
| | | US 2014111019 A1 | 24-04-2014 |
| | | US 2014111154 A1 | 24-04-2014 |
| | | US 2017025904 A1 | 26-01-2017 |
| | | US 2019181694 A1 | 13-06-2019 |
| | | WO 2014063159 A2 | 24-04-2014 |
| US 2016187520 A1 | 30-06-2016 | CN 107112814 A | 29-08-2017 |
| | | EP 3241265 A1 | 08-11-2017 |
| | | KR 20170102873 A | 12-09-2017 |
| | | US 2016187520 A1 | 30-06-2016 |
| | | US 2019250298 A1 | 15-08-2019 |
| | | WO 2016109161 A1 | 07-07-2016 |
| DE 102017101982 A1 | 02-08-2018 | DE 102017101982 A1 | 02-08-2018 |
| | | EP 3357742 A1 | 08-08-2018 |

EPO FORM P0461

Für nähere Einzelheiten zu diesem Anhang : siehe Amtsblatt des Europäischen Patentamts, Nr.12/82